# EUROPEAN PATENT APPLICATION

(11) **EP 1 393 786 A1**
(43) Date of publication of application: **03.03.2004**
(21) Application number: 03018954.2
(22) Date of filing: 20.08.2003
(51) Int. Cl.: A63F 13/00, A63F 13/12

(54) **Game server and program**

(30) Priority: 20.08.2002 JP 2002239288; 20.08.2002 JP 2002239289; 04.09.2002 JP 2002258506; 01.10.2002 JP 2002289140; 01.10.2002 JP 2002289141
(71) Applicant: Aruze Corp., Tokyo 135-0063 (JP)
(72) Inventor: Okada, Kazuo, Tokyo, 135-0063 (JP)
(74) Representative: TER MEER STEINMEISTER & PARTNER GbR

(57) **Abstract**

By diversifying a variation of so-called difference detection game, a player can enjoy the difference detection game without being tired of it. The difference detection game is played on a display of a terminal device connected to a server via a communication line. When the player sends a correct answer in the difference detection game, a point may be provided to the player. In addition, a reference image for reference and a difference image may be switched and alternatively displayed on the display of the terminal device. In addition, the reference image and the difference image may be simultaneously displayed. The difference detection game may be played with animated images. In addition, a difference screen may be created from a replay screen of a different game such that the player may play the difference detection game after the different game.

## Description

### BACKGROUND OF THE INVENTION

### FIELD OF THE INVENTION

This invention relates to a game server and program.

### RELATED ART

A difference detection game is one of the games that have long been popular among the general public since the game is simple in terms of its game structure and in terms of its rules and it is also good for mental exercise. Here, the difference detection game may refer to find-the-differences or spot-the differences game or puzzle. In the game, two pictures are typically shown side by side so that a player can compared them to find the differences.

This difference detection game has been played by use of images drawn on paper, however, recently, this game has also been played as an arcade game. In these games, generally, a reference image for reference in difference detection and a difference image were placed side by side, and a player played a game while comparing these.

On the other hand, the aforementioned arcade games include various games, and for example, car racing games, sports games such as soccer games, baseball games, and battle games can be mentioned as mainstream. In the related art, Japanese unexamined patent applications of Publication Nos. H11-16955 and H06-343759 may be referred to.

In some of these games, similar to an actual live telecast, etc., highlight scenes during the game are replayed, and the player can enjoy him/herself observing what kinds of operations he/she performed.

On the other hand, owing to the development in communication technology in recent years, so-called net games, which are played via the Internet, have become popular. In these net games, enjoyment different from that of the prior one-person game, such that players play a game transmitted from a server on terminal devices to compete for points, has been created. Such a net game has also been played on portable terminal devices such as portable telephone (or cellular telephone or cellular phone), thus allowing portable terminal device users to play the game anytime anywhere when they have some spare time. Here, the portable telephone may be referred to as a cellular telephone.

The prior difference detection game is simple in structure or simple in game characteristics such that, as described above, a player simply detects differences in a condition where a reference image and a difference image are placed side by side, therefore, the player may easily grow tired thereof. Accordingly, players do not feel like playing difference detection games repeatedly, and the number of players who play difference detection games may decrease.

In addition, since a game is played in a condition where a reference image and a difference image are placed side by side, the difficulty level of a difference detection game has been determined merely at a level where differences are made at difficult-to-detect parts or made at easy-to-find parts. Concretely, in order to heighten the difficulty level, images are drawn in detail, and difference parts are made in background parts having no relation to mainly drawn images.

However, players who are used to playing difference detection games can easily find differences however detailed the difference parts are made, therefore, such players soon grow tired of difference detection games in many cases.

Moreover, in the method where a reference image and a difference image are placed side by side, if this difference detection game is played by means of, for example, a portable terminal, its screen is too small, therefore, image comparison is difficult.

In addition, a game played with a still image strikes players as out-of-date, and even when an animated image, which is used in numerous games currently in fashion, is utilized, if replays are merely ones that are performed in racing games, sports games, battle games, etc. , players who could not perform well in operation and players who are used to playing games may experience boredom. This is because, most replays usually display scenes during the games as these were operated by players or after changing these into video images where view points have been slightly changed, and the players are merely made to repeatedly observe scenes that they have once observed during the games where they themselves performed operations.

On the other hand, owing to the development in communication technology in recent years, so-called net games, which are played via the Internet, have become popular. In these net games, enjoyment different from that of the prior one-person game, such that players play a game distributed from a server on terminal devices to compete by points, has been created.

### SUMMARY OF THE INVENTION

It is an object of the present invention to ease the difficulty level setting of a so-called difference detection game, have enriched variations in this difficulty level setting and acquiring points, or enable a player to play a so-called difference detection game anytime anywhere, and moreover, it is an object to provide a difference detection game which a player can enjoy without growing tired of it.

According to the present invention, a game server which is constructed so as to allow a player to play a difference detection game on a display of a terminal device connected to a server via a communication line and provides, when the player elicits a correct answer in the difference detection game, a point on the player and which switches and alternatively displays a reference image for reference in difference detection and a difference image on the display of the terminal device, or a game server which simultaneously displays a reference image for reference in difference detection and difference images on a display of a terminal device to allow a player to select a difference image to answer may be provided. In addition, in terms of the former switching display, a game server which allows a player to answer while observing the same may be provided.

In addition, according to the present invention, a game server which is constructed so as to allow a player to play a difference detection game with animated images on a display of a terminal device connected to the server via a communication line and provides, when the player elicits a correct answer in the difference detection game, a point on the player and which switches and alternatively displays a reference image for reference in difference detection and a difference image on a display of a terminal device may be provided.

In addition, according to the present invention, a difference detection game which lets a player play some game on a display of a game machine or terminal device, creates a difference screen from replay screens of the game, and lets the player play a difference detection game may further be provided.

More concretely, according to the present invention, the following can be provided.
(1) In a game server which transmits and receives data to and from a plurality of user terminal devices via a communication line, executes a difference detection game on displays provided in the user terminal devices, and includes: point providing means for providing, if an answer from a player is correct, a point on the player, a game server is provided that is characterized in that image switching means for switching and alternately displaying a reference image for reference in difference detection and a difference image on the display is provided.
   Or, a game server is also provided that is characterized in that image display means for displaying, on the display, a reference image for reference in error detection and simultaneously displaying a plurality of difference images for a difference detection with reference to this reference image is provided.
   As such, a game server can transmit and receive data to and from a plurality of user terminal devices via a communication line. In addition, it may execute a difference detection game on displays provided in the user terminal devices. Furthermore, it may be provided with point providing means which provides, if it is judged that an answer from a player is a correct answer, a point on the player. Then, it becomes possible to provide image switching means for switching and alternatively displaying a reference image for reference in difference detection and a difference image on the display. Or, a game server may make the display display a reference image for reference in error detection. In addition, it is possible to provide image display means for simultaneously displaying a plurality of difference images for difference detection with reference to this reference image.
   When this invention's game server is used, since a game can be played, for example, in connection with a communication line or after downloading game data from the server, a terminal device user can play a difference detection game anytime he/she likes whenever he/she wants to play it.
   In addition, if a reference image and a difference image are switched and alternatively displayed, an advantage is provided such that, compared to simultaneously displaying a reference image and a difference image by splitting a screen into a plural number, a game can be played in an easily viewable condition even on a portable terminal device with a small screen .
   In addition, a plurality of difference images have been prepared for a reference image and these are simultaneously displayed on the display of the terminal device, therefore, a plurality of difference detection games can be simultaneously enjoyed. In addition, it is also possible to provide higher game characteristics by, for example, setting difficulty levels in stages for a plurality of difference images.
(2) The game server as set forth in (1) is provided that comprises: switching timing setting means for setting a timing in which an image displayed on the display is switched by the image switching means, and is characterized in that the image switching means has a function to switch and display the reference image and the difference image on the display at the timing set by the switching timing setting means.
   Or, the game server is provided that is characterized in that points to be provided on the player by the point providing means have been individually set in the respective difference images of the plurality of difference images.
   As described above, the game server may comprise switching timing setting means for setting timing in which switching of an image displayed on the display is carried out by the image switching means. Then, the image switching means can switch and display, on the display, the reference image and the difference image in accordance with the timing set by the switching timing setting means.
   Or, it is also possible to individually set points to be provided to the player by the point providing means in the respective difference images of the plurality of difference images.
   As such, the game server may control switching timing between a reference image and a difference image. For example, it is also possible to quicken switching timing so that a user can easily elicit a collect answer. On the other hand, it is also possible to delay switching timing so that a user cannot easily elicit a correct answer.
   In addition, if a player can easily find a difference in a difference image and cannot easily find a difference in another difference image, these points can have a difference according to the difficulty levels.
   For example, if players can receive prizes according to the points, the game may be provided as a game where acquiring a difference in points causes a difference in grades of prizes to be received.
   In addition, as described above, display image switching timing may be provided as one element so that, by changing the same, the difficulty level of the game can be changed. It becomes possible to easily provide a player with a difference detection game having difficulty level variations in an ample amount without managing a large quantity of difference detection games in advance according to difficulty levels. Moreover, the burden of control carried out in the game server can also be reduced.
(3) The game server as set forth in (2) is provided that comprises: play-number storing means for storing play-number data indicating a number of times a player has utilized the difference detection game; and player identification means for identifying a player who is about to play the difference detection game, and includes: number-comparing means for comparing reference number-comparing data as a criterion of determination as to whether or not the player identified by the player identification means has frequently utilized this difference detection game and the play-number data that has been stored in the play-number storing means, and is characterized in that the timing set by the switching timing setting means is changed in accordance with a result of the comparison made by the number-comparing means.
(4) The game server as set forth in (2) is provided that comprises: winning number storing means for storing winning points or prizes when a player utilized the difference detection game; and player identification means for identifying a player who is about to play this difference detection game, and includes: numerical value comparing means for comparing reference numerical value data as a criterion of determination as to whether or not the player identified by the player identification means has won a large number of points or prizes in this difference detection game and the numerical value data stored in the winning number storing means, and is characterized in that the timing set by the switching timing setting means is changed in accordance with a comparison result of the numerical value comparing means.
   According to these aspects of the invention as described in (3) or (4), in addition to effects produced when the game server as described in (2) is used, it becomes possible to change the difficulty level of a difference detection game according to the player's state of winning points and utilization frequency.
(5) The game server as set forth in (3) or (4) is provided that is characterized in that hint image display control means for displaying a hint image that is advantageous to the player to find the correct answer on the display in accordance with the comparison result of the number-comparing means or the numerical value comparing means is provided.
   According to this aspect of the invention, in addition to the effects as described in (3) or (4), a hint image can be displayed according to the player's state of wining prizes and utilization frequency on a user terminal of the player, whereby it becomes possible to change the difficulty level of a difference detection game.
(6) A program which makes a game server that transmits and receives data to and from a plurality of user terminal devices via a communication line and executes a difference detection game on displays provided in the user terminal devices , execute: a point providing step of providing, if an answer from a player playing the difference detection game is correct, a point on this player; and an image switching step of switching and alternately displaying a reference image for reference in difference detection and a difference image on the display.

According to the present invention, it becomes possible to make "a game server which transmits and receives data to and from a plurality of user terminal devices via a communication line, for executing a difference detection game on displays provided in the user terminal device" "execute a point providing step of providing, when an answer from a player playing the difference detection game is a correct answer, a point on the player, and an image switching step of switching and alternatively displaying a reference image for reference in difference detection and a difference image on the display."

When this invention's program is used in a game server, on a terminal device, since a game can be played, for example, in connection with a communication line or after downloading game data from the server, a terminal device user can play a difference detection game anytime he/she likes whenever he/she wants to play it.

In addition, since the program is constructed so that a reference image and a difference image are switched and alternatively displayed, an advantage is provided such that, compared to simultaneously displaying a reference image and a difference image by splitting a screen into a plural number, a game can be played in an easily viewable condition even on a terminal device with a small display.

In addition, a game server is provided that is characterized in that each difference image of the plurality of difference images has a difference from the reference image at one point, and difference image selecting means for selecting which difference image out of the plurality of difference images the player uses to play the difference detection game is provided.

Each difference image of the plurality of difference images has a difference from the reference image at one point, and it becomes possible to construct a game server so as to include difference image selecting means for selecting which difference image out of the plurality of difference images the player uses to play the difference detection game.

By such a construction, the player can select a difference image which he/she wants to answer and play a difference detection game by use of this difference image. In addition, if a difference is made in points obtained from respective difference images, the player can enjoy a difference detection game in a personal manner by performing an operation such as to select a difference image with which a desirable point can be obtained.

In addition, in a game server which transmits and receives data to and from a plurality of user terminal devices via a communication line, executes a difference detection game on displays provided in the user terminal devices, and includes: providing means for providing, if an answer from a player is correct, a point or prize on the player, a game server is provided that comprises: image display means for displaying on the display a reference image for reference in difference detection and simultaneously displaying a plurality of difference images for a difference detection with reference to this reference image; image selecting means for a player to select which difference image out of the plurality of difference images to be used for playing this difference detection game; and a correspondence data set for establishing a correspondence between each of the plurality of difference images and the point or prize, and is characterized in that corresponding.image display means which, in response to a player having elicited a correct answer in the selected difference image, selects the correspondence data set corresponding to this difference image and displays the data as a corresponding image on the display is provided.

As described above, a game server is provided that transmits and receives data to and from a plurality of user terminal devices via a communication line, executes a difference detection game on displays provided in the user terminal devices, and includes: providing means for providing, if an answer from a player is correct, a point or prize on the player. Then, the game server can comprise: image display means for displaying on the display a reference image for reference in difference detection and simultaneously displaying a plurality of difference images for a difference detection with reference to this reference image; image selecting means for a player to select which difference image out of the plurality of difference images to be used for playing this difference detection game; and a correspondence data set for establishing a correspondence between each of the plurality of difference images and the point or prize, and include : corresponding image display means which, in response to a player having elicited a correct answer in the selected difference image, selects the correspondence data set corresponding to this difference image and displays the data as a corresponding image on the display.

When this invention's game server is used, since a game can be played, for example, in connection with a communication line or after downloading game data from the server, a terminal device user can play a difference detection game anytime he/she likes whenever he/she wants to play it.

In addition, a plurality of difference images have been prepared for a reference image and these can be simultaneously displayed on the display of the terminal device, therefore, not only provided is an effect such that a plurality of difference detection games can be simultaneously enjoyed, but also it is also possible to provide higher game characteristics by, for example, setting difficulty levels in stages for a plurality of difference images.

In addition, by such a construction, for example, if there is a difference in difficulty levels in eliciting a correct answer from respective difference images, that is, if a player can easily find a difference in a difference image and cannot easily find a difference in another difference image, these points can have a difference according to the difficulty levels, or prizes to be provided can have a difference in grades. Consequently, the player can enjoy the game while aiming at obtaining higher gains.

In addition, a program which makes a game server that transmits and receives data to and from a plurality of user terminal devices via a communication line and executes a difference detection game on displays provided in the user terminal devices, execute: a point providing step of providing, if an answer from a player playing the difference detection game is correct, a point on this player; and an image displaying step of displaying a reference image for reference in difference detection and simultaneously displaying a plurality of difference images for a difference detection with reference to the reference image on the display.

As described above, it becomes possible to make a game server execute : a point providing step of providing, if an answer from a player playing the difference detection game is correct, a point on this player; and an image displaying step of displaying a reference image for reference in difference detection and simultaneously displaying a plurality of difference images for a difference detection with reference to the reference image on the display.

When such a program is used in a game server, since a game can be played, for example, in connection with a communication line or after downloading game data from the server, a terminal device user can play a difference detection game anytime he/she likes whenever he/she wants to play it.

In addition, a plurality of difference images have been prepared for a reference image and these can be simultaneously displayed on the display of the terminal device, therefore, not only provided is an effect such that a plurality of difference detection games can be simultaneously enjoyed, but also it is also possible to provide higher game characteristics by, for example, setting difficulty levels in stages for a plurality of difference images.

In addition, in a game server which transmits and receives data to and from a plurality of user terminal devices via a communication line, executes a difference detection game on displays provided in the user terminal devices, and includes: providing means for providing, if an answer from a player is correct, a point or prize on the player, a game server is provided that is characterized in that reference image display means for displaying a reference image for reference in difference detection on the display as an animated image; difference image display means for displaying a difference image as an animated image; and image switching means for switching and alternately displaying the reference image and the difference image.

Thus , a game server is provided that transmits and receives data to and from a plurality of user terminal devices via a communication line, executes a difference detection game on displays provided in the user terminal devices, and includes: providing means for providing, if an answer from a player is correct, a point or prize on the player. Then, the game server can include: reference image display means for displaying a reference image for reference in difference detection on the display as an animated image; difference image display means for displaying a difference image as an animated image; and image switching means for switching and alternately displaying the reference image and the difference image.

With this game server, since a game can be played, for example, in connection with a communication line or after downloading game data from the server, a terminal device user can play a difference detection game anytime he/she likes whenever he/she wants to play it.

In addition, by displaying a reference image and a difference image with animated images, created is the possibility that enjoyment by a player is increased compared to a difference detection game played with still images. Concretely, by providing animated images used in a difference detection game with a story, the player may play a difference detection game while following its storyline, therefore, greater enjoyment can be added to the game of a simple difference detection, which is likely to become monotonous.

Furthermore, since a reference image and a difference image are switched and alternatively displayed, an advantage is provided such that, compared to simultaneously displaying a reference image and a difference image, that is, compared to displaying these images by splitting a screen into two, a game can be played in an easily viewable condition even on a terminal device with a small display.

In addition, the game server comprises: switching time setting means for setting a time at which an image displayed on the display is switched by the image switching means, and is characterized in that the image switching means has a function to switch and display the reference image and the difference image on the display in accordance with an interval set by the switching time setting means.

As described above, the server can comprise switching time setting means for setting a time at which an image displayed on the display is switched by the image switching means. Then, it becomes possible that the image switching means switches and displays the reference image and the difference image on the display in accordance with an interval set by the switching time setting means.

As such, since the game server controls switching time to switch over a reference image and a difference image, it is possible, for example, to shorten the switching time of a difference image, that is, to reduce the reproducing time of the difference image so that a user cannot easily elicit a correct answer, and on the other hand, it is also possible to prolong the switching time, that is, to extend the reproducing time of the difference image so that a user can easily elicit a correct answer.

In addition, as in this invention, display image switching time is provided as one element so that, by changing the same, the difficulty level of the game can be changed, whereby it becomes possible to easily provide a player with a difference detection game having difficulty level variations in an ample amount without managing a large quantity of difference detection games in advance according to difficulty levels.

In addition, the game server comprises: cumulative number-comparing storing means for cumulatively storing a number of times in which an image displayed on the display is switched by the image switching means; and a plurality of correspondence data sets for establishing a correspondence between the difference image and the point or prize, and is characterized in that corresponding image display means which, when the player elicits a correct answer, in response to the number of times stored in the cumulative number-comparing storing means, selects one data set from the plurality of correspondence data sets corresponding to this difference image and displays the same as a corresponding image on the display is provided.

As such, the server can comprise: cumulative number-comparing storing means for cumulatively storing a number of times in which an image displayed on the display is switched by the image switching means; and a plurality of correspondence data sets for establishing a correspondence between the difference image and the point or prize. Then, it becomes possible to include corresponding image display means which, when the player elicits a correct answer, in response to the number of times stored in the cumulative number-comparing storing means, selects one data set from the plurality of correspondence data sets corresponding to this difference image and displays the same as a corresponding image on the display.

As such, since a time required until a player elicits a correct answer is stored in this game server, depending on the length of this time, the contents of a point or prize to be provided on the player can be changed. Concretely, for example, to a player who took a long time in eliciting a correct answer, the point or prize to be provided can be lowered in grading, and to a player who took a short time in eliciting a correct answer, the point or prize to be provided can be heightened in grading.

In addition, a program is provided that makes a game server that transmits and receives data to and from a plurality of user terminal devices via a communication line, executes a difference detection game on displays provided in the user terminal devices, and includes: providing means for providing, if an answer from a player is correct, a point or prize on the player, execute: a reference image displaying step of displaying a reference image for reference in difference detection as an animated image on the display; an image displaying step of displaying a difference image as an animated image; and an image switching step of switching and alternately displaying the reference image and the difference image.

As described above, a game server may be provided which transmits and receives data to and from a plurality of user terminal devices via a communication line, executes a difference detection game on displays provided in the user terminal devices , and includes: providing means for providing, if an answer from a player is correct, a point or prize on the player. It becomes possible to execute: a reference image displaying step of displaying a reference image for reference in difference detection as an animated image on the display; an image displaying step of displaying a difference image as an animated image; and an image switching step of switching and alternately displaying the reference image and the difference image.

When this program is used, since a game can be played, for example, in connection with a communication line or after downloading game data from the server, a terminal device user can play a difference detection game anytime he/she likes whenever he/she wants to play it.

In addition, since a reference image and a difference image can be displayed with animated images, created is a possibility that enjoyment by a player is increased compared to a difference detection game played with still images. Concretely, by providing animated images used in a difference detection game with a story, the player may play a difference detection game while following its storyline, therefore, greater enjoyment can be added to the game of a simple difference detection, which is likely to become monotonous.

Furthermore, since a reference image and a difference image can be switched and alternatively displayed, an advantage is provided such that, compared to simultaneously displaying a reference image and a difference image, that is, compared to displaying these images by splitting a screen into two, a game can be played in an easily viewable condition even on a terminal device with a small display.

In addition, in a game server which transmits and receives data to and from a plurality of portable terminal devices via a communication line, executes a difference detection game on displays provided in the portable terminal devices, and includes: answer data storing means for storing data showing an answer in this difference detection game provided from the portable terminal device; correct answer data storing means for storing correct answer data as a criterion of determination as to whether or not the data showing an answer stored in the answer image storing means is data showing a correct answer; comparing means for comparing the answer data stored in the answer data storing means and the correct answer data stored in the correct answer data storing means; and providing means for displaying, if the answer data is judged to be a correct answer as a result of a comparison by the comparing means, a point or prize on the player, a game server is provided that comprises: image switching means for switching and alternately displaying a reference image for reference in difference detection and a difference image on the display; and switching time setting means for setting a time at which an image displayed on the display is switched by the image switching means, and is characterized in that the image switching means has a function to switch and display the reference image and the difference image on the display in accordance with an interval set by the switching time setting means.

As described above, a game server may be provided that transmits and receives data to and from a plurality of portable terminal devices via a communication line, executes a difference detection game on displays provided in the portable terminal devices, and includes: answer data storing means for storing data showing an answer in this difference detection game provided from the portable terminal device; correct answer data storing means for storing correct answer data as a criterion of determination as to whether or not the data showing an answer stored in the answer image storing means is data showing a correct answer; comparing means for comparing the answer data stored in the answer data storing means and the correct answer data stored in the correct answer data storing means; and providing means for displaying, if the answer data is judged to be a correct answer as a result of a comparison by the comparing means, a point or prize on the player. Then, the game server can comprise: image switching means for switching and alternately displaying a reference image for reference in difference detection and a difference image on the display; and switching time setting means for setting a time at which an image displayed on the display is switched by the image switching means, and the image switching means has a function to switch and display the reference image and the difference image on the display in accordance with an interval set by the switching time setting means.

In this game server, since a game can be played, for example, in connection with a communication line or after downloading game data from the server, a portable terminal device user can play a difference detection game anytime and anywhere he/she likes whenever he/she wants to play it.

In addition, since a reference image and a difference image are switched and alternatively displayed, an advantage is provided such that, compared to simultaneously displaying a reference image and a difference image by splitting a screen into a plural number, a game can be played in an easily viewable condition even on a portable terminal device with a small screen .

Furthermore, since the game server controls switching time to switch over a reference image and a difference image, it is possible, for example, to shorten the switching time of a difference image, that is, to reduce the reproducing time of the difference image so that a user cannot easily elicit a correct answer, and on the other hand, it is also possible to prolong the switching time, that is , to extend the reproducing time of the difference image so that a user can easily elicit a correct answer.

Still furthermore, as in this invention, display image switching time is provided as one element so that, by changing the same, the difficulty level of the game can be changed, whereby it becomes possible to easily provide a player with a difference detection game having difficulty level variations in an ample amount without employing a method such that a large quantity of difference detection games are managed in advance according to difficulty levels. Moreover, the burden of control carried out in the game server can also be reduced.

In addition, the game server is provided that comprises: data providing means for providing data for the plurality of portable terminal devices via the a communication line; reference image data storing means for storing reference image data to display the reference image for reference in difference detection on the displays provided in the portable terminal devices; and difference image data storing means for storing difference image data to display the difference image on the display, and is characterized in that the data providing means provides the reference image data and the difference image data for the portable terminal device before executing the difference detection game on the display of the portable terminal device.

Such a server can comprise: data providing means for providing data for a plurality of portable terminal devices via the a communication line; reference image data storing means for storing reference image data to display the reference image for reference in difference detection on the displays; and difference image data storing means for storing difference image data to display the difference image on the display, wherein the data providing means provides the reference image data and the difference image data for the portable terminal device before executing the difference detection game on the display of the portable terminal device.

In this game server, reference image data and difference image data required to execute a difference detection game can be transmitted to a portable terminal device such as a cellular telephone before the difference detection game is played, and in the portable terminal device, both images are alternatively switched based on the previously received reference data and difference data.

Thereby, during the difference detection game, it becomes unnecessary to receive image data from the game server every time both images are alternatively switched, the time required to receive image data can be reduced, therefore, quick switching of both images can be expected.

In addition, the game server is characterized in that image display control means for displaying the reference image or the difference image, in an enlarged manner or a reduced manner in response to an image enlarging request or an image reducing request from the portable terminal devices, on the display provided in the portable terminal device is provided.

Such a server as described above can include image display control means for displaying the reference image or the difference image, in an enlarged manner or a reduced manner in response to an image enlarging request or an image reducing request from the portable terminal devices, on the display provided in the portable terminal device.

When this invention's game server is used, a player can enlarge and reduce the image by his/her own operation, and, for example, even on a portable terminal device with a small screen such as a cellular telephone, provision of a preferred difference detection game can be expected without causing a harmful effect on a user, such that since the screen is small, a difference point cannot be easily detected or a difference point cannot be easily selected.

In addition, the present invention can include the following.
(A) The game server is provided that includes : specifying image display means for displaying, on the display provided in the portable terminal device, a specifying image to specify a position in the reference image or difference image displayed on the display; specified position detecting means for detecting a position in the reference image or difference image specified by the specifying image displayed by the specifying image display means; and image display control means for an enlarged display or reduced display of a predetermined image region including the position in the reference image or difference image detected by the specified position detecting means, at a request for an image enlargement or a request for an image reduction from the portable terminal device.
   Such a server can include: specifying image display means for displaying, on the display provided in the portable terminal device, a specifying image to specify a position in the reference image or difference image displayed on the display; specified position detecting means for detecting a position in the reference image or difference image specified by the specifying image displayed by the specifying image display means ; and image display control means for an enlarged display or reduced display of a predetermined image region including the position in the reference image or difference image detected by the specified position detecting means, at a request for an image enlargement or a request for an image reduction from the portable terminal device.
   When this game server is used, a player can freely specify a point in an image by a pointer or the like and thereby freely display a desirable position in the image in an enlarged manner or in a reduced manner.
   Thereby, for example, even on a portable terminal device with a small screen such as a cellular telephone, provision of a preferred difference detection game can be expected without causing a harmful effect on a user, such that since the screen is small, a difference point cannot be easily detected or a difference point cannot be easily selected.
(B) The game server is provided that is characterized in that the image display control means displays the reference image or difference image in a plurality of stages.
   As such, the image display control means can display the reference image or difference image in an enlarged manner or in a reduced manner in a plurality of stages.
   According to this game server, since an image selected by a player is gradually displayed in an enlarged manner or in a reduced manner in a plurality of stages every time a player's operation is performed, the player can freely adjust the image size to a size for which a difference point can be easily found or selected, and therefore, the player can play the game with a difficulty level suitable to him/herself.
(C) A game server is provided that includes: judging means for judging, when the reference image or the difference image is displayed in an enlarged manner by the image display control means, as to whether or not an image showing a correct answer exists in the image displayed in an enlarged manner; and notifying image display means for displaying, based on the result judged by the judging means, a notifying image on the display.

As such, when an enlarged display is carried out by the image display means in response to an operation of the portable terminal device by the player, the player is notified whether or not an image showing a difference image exists in the image displayed in an enlarged manner is notified.

When this game server is used, since whether or not a difference image is included in an image displayed in an enlarged manner by a selective operation of a portable terminal device by a player is judged, the player can find whether or not a difference is included in the image selected by him/herself, and if the player finds that a difference is not included, he/she can select a difference image again before making a decision on his/her answer.

In addition, a game server is provided that comprises: number-of-times-of-enlargement storing means for storing a number of times in which an image displayed on the display by the image display control means has been displayed in an enlarged manner; and a plurality of correspondence data sets for establishing a correspondence between the difference image and the point or prize, and is characterized in that corresponding image display means which, if the answer data is judged to be a correct answer as a result of a comparison by the comparing means, selects one data set from the plurality of correspondence data sets corresponding to the difference image according to the number of times of enlarged display stored in the number-of-times-of-enlargement storing means and displays the data as a corresponding image on the display is provided.

As such, a game server can comprise: number-of-times-of-enlargement storing means for storing a number of times in which an image displayed on the display by the image display control means has been displayed in an enlarged manner; and a plurality of correspondence data sets for establishing a correspondence between the difference image and the point or prize, and is characterized in that corresponding image display means which, if the answer data is judged to be a correct answer as a result of a comparison by the comparing means , selects one data set from the plurality of correspondence data sets corresponding to the difference image according to the number of times of enlarged display stored in the number-of-times-of-enlargement storing means and displays the data as a corresponding image on the display is provided.

According to this game server, since a number of times in which a player has carried out an enlarged display is stored in the game server, the contents of a point or prize to be provided on the player can be changed according to the number of times. For example, for a player who has carried out an enlarged display a large number of times until eliciting a correct answer, the point or prize to be provided can be lowered in grading, and for a player who has carried out an enlarged display a small number of times until eliciting a correct answer, the point or prize to be provided can be heightened in grading.

In addition, a program is provided that makes a game server that transmits and receives data to and from a plurality of portable terminal devices via a communication line, executes a difference detection game on displays provided in the portable terminal devices, and includes: answer data storing means for storing data showing an answer of this difference detection game provided from the portable terminal device; correct answer data storing means for storing correct answer data as a criterion of determination as to whether or not the data showing an answer stored in the answer image storing means is data showing correct answers; comparing means for comparing the answer data stored in the answer data storing means and the correct answer data stored in the correct answer data storing means; and providing means for displaying, if the answer data is judged to be a correct answer as a result of a comparison by the comparing means, a point or prize on the display, execute: an image switching step of switching and alternately displaying a reference image for reference in difference detection and a difference image on the display; and a switching time setting step of setting a time at which an image displayed on the display is switched by the image switching step, and is characterized in that the image switching step is for switching and displaying the reference image and the difference image on the display in accordance with an interval set by the switching time setting step.

A game server may be provided that transmits and receives data to and from a plurality of portable terminal devices via a communication line, executes a difference detection game on displays provided in the portable terminal devices, and includes: answer data storing means for storing data showing an answer of this difference detection game provided from the portable terminal device; correct answer data storing means for storing correct answer data as a criterion of determination as to whether or not the data showing an answer stored in the answer image storing means is data showing correct answers; comparing means for comparing the answer data stored in the answer data storing means and the correct answer data stored in the correct answer data storing means; and providing means for displaying, if the answer data is judged to be a correct answer as a result of a comparison by the comparing means, a point or prize on the display. Then, it becomes possible to execute: an image switching step of switching and alternately displaying a reference image for reference in difference detection and a difference image on the display; and a switching time setting step of setting a time at which an image displayed on the display is switched by the image switching step, and it becomes possible that the image switching step switches and displays the reference image and the difference image on the display in accordance with an interval set by the switching time setting step.

According to this program, since a game can be played, for example, in connection with a communication line or after downloading game data from the server, a portable terminal device user can play a difference detection game anytime and anywhere he/she likes whenever he/she wants to play it.

In addition, since a reference image and a difference image are switched and alternatively displayed, an advantage is provided such that, compared to simultaneously displaying a reference image and a difference image by splitting a screen into a plural number, a game can be played in an easily viewable condition even on a portable terminal device with a small screen.

Furthermore, since the game server controls the time for switching a reference image and a difference image, a new effect is provided such that it is also possible to shorten a switching time for a difference image, that is, to reduce a difference image reproducing time so that a user cannot easily elicit a correct answer, and on the other hand, it is also possible to prolong the switching time, that is, to extend the difference image reproducing time so that a user can easily elicit a correct answer.

Still furthermore, as in this invention, the display image switching time is provided as one element so that, by changing the same, the difficulty level of the game can be changed, therefore, it becomes possible to easily provide a player with a difference detection game having difficulty level variations in an ample amount without employing a method such that a large quantity of difference detection games are managed in advance according to difficulty levels. Moreover, this allows a reduction in the burden of control carried out in the game server .

Still furthermore, such programs may be computer readable programs and may be stored in a storage medium of a server, etc. In addition, these programs may be stored in a hard disk device, a recording medium such as a CD-ROM and a DVD. Furthermore, these programs may not necessarily be previously stored but may be stored in memory after power application (a loading process including downloading from the Internet is carried out) . Still furthermore, such programs may be stored in a storage medium built in an apparatus of another construction, and may also be stored in a divided manner in a storage medium built in a server.

In addition, a game server is provided which transmits and receives data to and from a plurality of user terminal devices via a communication line, executes a difference detection game on displays provided in the user terminal devices , and includes : answer data storing means for storing data showing an answer in this difference detection game provided from the portable terminal device; correct answer data storing means for storing correct answer data as a criterion of determination as to whether or not the data showing answers stored in the answer image storing means is data showing a correct answer; comparing means for comparing the answer data stored in the answer data storing means and the correct answer data stored in the correct answer data storing means; and providing means for displaying, if the answer data is judged to be a correct answer as a result of a comparison by the comparing means, a point or prize on the display, and is characterized in that play history storing means which executes a game different from the difference detection game in advance before executing the difference detection game on the display and stores data showing a play history of a game different from the difference detection game, provided from the user terminal devices; reference image display means for displaying a replay image of the first game as a reference image of the difference detection game based on the data showing a play history stored in the play history storing means on the display; difference image creating means for creating, based on the data showing a play history stored in the play history storing means, a difference image in the difference detection game, being different from the replay image; and image display means for displaying the difference image created by the difference image creating means on the display.

As such, a game server may be provided that transmits and receives data to and from a plurality of user terminal devices via a communication line, executes a difference detection game on displays provided in the user terminal devices, and includes : answer data storing means for storing data showing an answer in this difference detection game provided from the portable terminal device; correct answer data storing means for storing correct answer data as a criterion of determination as to whether or not the data showing answers stored in the answer image storing means is data showing a correct answer; comparing means for comparing the answer data stored in the answer data storing means and the correct answer data stored in the correct answer data storing means; and providing means for displaying, if the answer data is judged to be a correct answer as a result of a comparison by the comparing means, a point or prize on the display. Then, it becomes possible to include: play history storingmeans which executes a game different from the difference detection game in advance before executing the difference detection game on the display and stores data showing a play history of a game different from the difference detection game, provided from the user terminal devices; reference image display means for displaying a replay image of the first game as a reference image of the difference detection game based on the data showing a play history stored in the play history storing means on the display; difference image creating means for creating, based on the data showing a play history stored in the play history storing means, a difference image in the difference detection game, being different from the replay image; and image display means for displaying the difference image created by the difference image creating means on the display.

When this game server is used, since a game can be played, for example, in connection with a communication line or after downloading game data from the server, a terminal device user can play a difference detection game anytime he/she likes whenever he/she wants to play it.

In addition, it becomes possible to let a player play two types of games, namely, to let a player play some type of game and let the player play a difference detection game by means of a reproduced picture of that game. Thereby, compared to a conventional game composed of a single game, the player can experience twofold enjoyment.

In addition, the game server is provided that comprises: image switching means for switching and alternately displaying the reference image and the difference image on the display; and switching time setting means for setting a time at which an image displayed on the display is switched by the image switching means , and is characterized in that the image switching means has a function to switch and display the reference image and the difference image on the display in accordance with an interval set by the switching timing setting means.

As such, a game server can include: image switching means for switching and alternately displaying the reference image and the difference image on the display; and switching time setting means for setting a time at which an image displayed on the display is switched by the image switching means, and the image switching means has a function to switch and display the reference image and the difference image on the display in accordance with an interval set by the switching timing setting means.

According to this game server, since a game can be played, for example, in connection with a communication line or after downloading game data from the server, a terminal device user can play a difference detection game anytime he/she likes whenever he/she wants to play it.

In addition, it becomes possible to let a player play two types of games, namely, to let a player play some type of game and let the player play a difference detection game by means of a reproduced picture of that game. Thereby, compared to a conventional game composed of a single game, the player can experience twofold enjoyment.

Furthermore, since a reference image and a difference image are switched and alternatively displayed, an advantage is provided such that, compared to simultaneously displaying a reference image and a difference image by splitting a screen into a plural number, a game can be played in an easily viewable condition even on a portable terminal device with a small screen.

Still furthermore, since the game server controls the time for switching a reference image and a difference image, a new effect is provided such that it is also possible to shorten a switching time for a difference image, that is, to reduce a difference image reproducing time so that a user cannot easily elicita correct answer, and on the other hand, it is also possible to prolong the switching time, that is, to extend the difference image reproducing time so that a user can easily elicit a correct answer.

Still furthermore, as in this invention, the display image switching time is provided as one element so that, by changing the same, the difficulty level of the game can be changed, therefore, it becomes possible to easily provide a player with a difference detection game having difficulty level variations in an ample amount without employing a method such that a large quantity of difference detection games are managed in advance according to difficulty levels. Moreover, this allows a reduction in the burden of control carried out in the game server .

In addition, the game server is provided that comprises: data providing means for providing data for the plurality of portable terminal devices via the a communication line; reference image data storing means for storing reference image data to display the reference image for reference in difference detection on the displays; and difference image data storing means for storing difference image data for displaying the difference image on the display, and is characterized in that the data providing means provides reference image data to display the reference image and difference image data to display the difference image for the user terminal device in advance before executing the difference detection game on the display.

As such, the game server can comprise: data providing means for providing data for the plurality of portable terminal devices via the a communication line; reference image data storing means for storing reference image data to display the reference image for reference in difference detection on the displays; and difference image data storing means for storing difference image data for displaying the difference image on the display, wherein the data providing means provides reference image data to display the reference image and difference image data to display the difference image for the user terminal device in advance before executing the difference detection game on the display.

According to this game server, reference image data and difference image data required to execute a difference detection game can be transmitted to a portable terminal device such as a cellular telephone before the difference detection game is played, and in the portable terminal device, both images are alternatively switched based on the previously received reference data and difference data.

Thereby, during the difference detection game, it becomes unnecessary to receive image data from the game server every time both images are alternatively switched, the time required to receive image data can be reduced, therefore, quick switching of both images can be expected.

In addition, a program is provided that makes a game server that transmits and receives data to and from a plurality of user terminal devices via a communication line, executes a difference detection game on displays provided in the user terminal devices, and includes: answer data storing means for storing data showing an answer of this difference detection game provided from the user terminal device; correct answer data storing means for storing correct answer data as a criterion of determination as to whether or not the data showing an answer stored in the answer image storing means is data showing a correct answer; comparing means for comparing the answer data stored in the answer data storing means and the correct answer data stored in the correct answer data storing means; and providing means for providing, if the answer data is judged to be a correct answer as a result of a comparison by the comparing means, a point or prize on the player, execute: a play history storing step which executes a game different from the difference detection game in advance before executing the difference detection game on the display and stores data showing a play history of a game different from the difference detection game, provided from the user terminal devices; a reference image displaying step of displaying, based on the data showing a play history stored by the play history storing step, a replay image of the first game as a reference image of the difference detection game on the display; a difference image creating step of creating, based on the data showing a play history stored in the play history storing step, a difference image of the difference detection game, being different from the replay image, based on the data showing a play history stored by the play history storing step; and an image displaying step of displaying the difference image created by the difference image creating step on the display.

Thereby, a game server may be provided that transmits and receives data to and from a plurality of user terminal devices via a communication line, executes a difference detection game on displays provided in the user terminal devices , and includes : answer data storing means for storing data showing an answer of this difference detection game provided from the user terminal device; correct answer data storing means for storing correct answer data as a criterion of determination as to whether or not the data showing an answer stored in the answer image storing means is data showing a correct answer; comparing means for comparing the answer data stored in the answer data storing means and the correct answer data stored in the correct answer data storing means; and providing means for providing, if the answer data is judged to be a correct answer as a result of a comparison by the comparing means, a point or prize on the player. Then, it becomes possible to make the game server execute: a play history storing step which executes a game different from the difference detection game in advance before executing the difference detection game on the display and stores data showing a play history of a game different from the difference detection game, provided from the user terminal devices; a reference image displaying step of displaying, based on the data showing a play history stored by the play history storing step, a replay image of the first game as a reference image of the difference detection game on the display; a difference image creating step of creating, based on the data showing a play history stored in the play history storing step, a difference image of the difference detection game, being different from the replay image, based on the data showing a play history stored by the play history storing step; and an image displaying step of displaying the difference image created by the difference image creating step on the display.

According to this game server, since a game can be played, for example, in connection with a communication line or after downloading game data from the server, a terminal device user can play a difference detection game anytime he/she likes whenever he/she wants to play it.

In addition, it becomes possible to let a player play two types of games, namely, to let a player play some type of game and let the player play a difference detection game by means of a reproduced picture of that game. Thereby, compared to a conventional game composed of a single game, the player can experience twofold enjoyment.

Furthermore, such programs may be computer readable programs and may be stored in a storage medium of a server, etc. In addition, these programs may be stored in a hard disk device, a recording medium such as a CD-ROM and a DVD. Furthermore, these programs may not necessarily be previously stored but may be stored in memory after power application (a loading process including downloading from the Internet is carried out) . Still furthermore, such programs may be stored in a storage medium built in an apparatus of another construction, and may also be stored in a divided manner in a storage medium built in a server.

As has been described, the first game different from the difference detection game may be a so-called video game such as a game played by a player in accordance with various images displayed on the screen . For example, games such as a car racing game, a sports game, and a shooting game can be included. Moreover, the first game is preferably a game which carries out, after the game ends, a replay display of an image displayed on the screen by a player's operation, such as, in a case of a car racing game, a driving scene from start to finish, and, in a case of a sports game, a point scoring scene.

In addition, the above-described play history may include not only game results such as victory or defeat and ranking but also progress until the game results are obtained. And, as the replay image, an image such as, for example, in a case of a car racing game, a driving scene of cars from start to finish, and, in a case of a sports game, a point scoring scene may be included. This may show an image displayed on the screen in response to a player's operation during the game played by the player. In addition, this image can either be an animated image or a still image.

Further features of the invention, its nature, and various advantages will be more apparent from the accompanying drawings and the following detailed description of the invention.

### BRIEF DESCRIPTION OF THE DRAWINGS

Fig. 1 is a schematic diagram showing an outline of the whole system for a difference detection game according to the present invention.
Fig. 2 is a block diagram showing a configuration of a game server of a part of a system for a difference detection game according to an embodiment of the present invention.
Fig. 3 is block diagram showing a configuration of a terminal device of a part of a system for a difference detection game according to an embodiment of the present invention.
Fig. 4 is a timing chart for explaining data exchanges between a server and a terminal device of a system for a difference detection game according to an embodiment of the present invention.
Fig. 5 shows a flowchart of a control process executed by a server according to an embodiment of the present invention.
Fig. 6 shows an example of a player information database recorded on a server of an embodiment of the present invention.
Fig. 7 shows a flowchart of a control process executed by a server according to an embodiment of the present invention.
Fig. 8A shows an example of a reference image displayed on a display of a terminal device according to an embodiment of the present invention.
Fig. 8B shows an example of a difference image displayed on a display of a terminal device according to an embodiment of the present invention.
Fig. 9 shows an example of an image displayed on a display of a terminal device according to an embodiment of the present invention.
Fig. 10 shows a flowchart of a control process executed by a terminal device according to an embodiment of the present invention.
Fig. 11 shows a flowchart of a control process executed by a server according to an embodiment of the present invention.
Fig. 12 shows an example of images displayed on a display of a terminal device according to an embodiment of the present invention.
Fig. 13 is a timing chart for explaining data exchanges between a server and a terminal device of a system for a difference detection game according to an embodiment of the present invention.
Fig. 14 shows a flowchart of a control process executed by a server according to an embodiment of the present invention.
Fig. 15A shows an example of a reference image displayed on the display of a terminal device according to an embodiment of the present invention.
Fig. 15B shows an example of a difference images displayed on the display of a terminal device according to an embodiment of the present invention.
Fig. 16 is a block diagram showing a configuration of a cellular telephone of a part of a system for a difference detection game according to an embodiment of the present invention.
Fig. 17 is a timing chart for explaining data exchanges between a server and a cellular telephone of a system for a difference detection game according to an embodiment of the present invention.
Fig. 18 shows a flowchart of a control process executed by a server of an embodiment of the present invention.
Fig. 19 shows a flowchart of a control process executed by a cellular telephone of an embodiment of the present invention.
Fig. 20A shows an example of a difference image displayed on a display of a cellular telephone according to an embodiment of the present invention.
Figs. 20B shows an example of an enlarged difference image displayed on a display of a cellular telephone according to an embodiment of the present invention.

### DETAILED DESCRIPTION OF THE INVENTION

Hereinafter, embodiments of the present invention will be described in detail based on the drawings.

### [Overall configuration]

An overall configuration of an image information processing system by the present invention will be described.

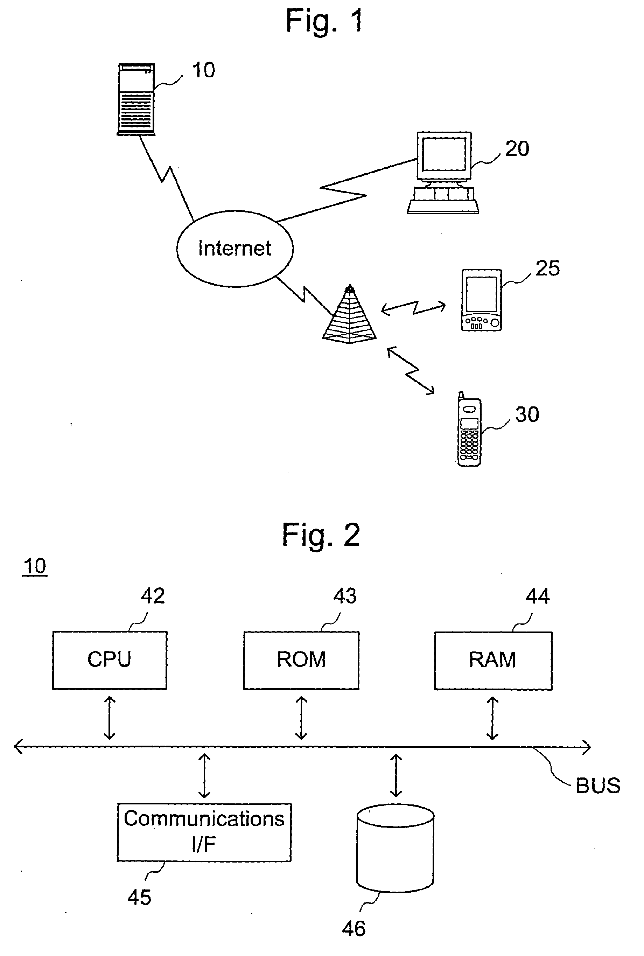

Fig. 1 is a view showing an overall configuration of a difference detection game system of the present embodiment. As shown in Fig. 1, a difference detection game system of the present embodiment is composed of a server 10, which is a game server to control the whole difference detection game, and a terminal device 20, a portable terminal device 25, or a cellular telephone 30 , which is connected to the server 10 via the Internet and on which a user plays a difference detection game. Here, the user terminal device may comprise the terminal device, the portable terminal device, the cellular telephone, and a combination thereof.

As described above, the terminal device 20, portable terminal device 25, and cellular telephone 30 are connected to the server 10 via the Internet and receive, from this server 10, a distribution of a difference detection game, control in progress of a game (control mainly related to an image display), a distribution of game results, etc.

Herein, in the following, a description will be given in a case where a difference detection game is played by the terminal device 20 connected to the server 10 as a first embodiment, and as a second embodiment, a description will be given in a case where a difference detection game is played by the cellular telephone 30 connected to the server 10.

### <<First embodiment>>

Hereinafter, as a first embodiment, a description will be given in a case where a difference detection game is played by the terminal device 20 connected to the server 10.

### [Server configuration]

Hereinafter, a block diagram showing a configuration of a server 10 of a part of a difference detection game system of the present embodiment will be shown in Fig. 2.

As shown in Fig. 2, the server 10 is composed of a CPU 42, a ROM 43, a RAM 44, a communication interface 45, and a hard disk 46 connected to a data bus BUS.

The CPU 42 is structured so as to execute various processes according to programs stored in the ROM 43. Namely, the CPU 42 receives, via the Internet connected by the communication interface 45, information from the terminal device 20 and stores the same in the RAM 44. This information includes information to identify a player who plays a difference detection game on the terminal device 20.

The aforementioned programs stored in the ROM 43 include a program for communication with the terminal device 20 and a program to display an image on a display provided in the terminal device 20.

The hard disk 46 stores, as will be described later, identification data of players who have played a difference detection game in this difference detection game system, number of times utilized, age, gender, number of times winning prizes as a database of player information.

Thus, the CPU 42 and one or more of the ROM 43, the RAM 44, and the hard disk 46 connected by the BUS may have functions as the point providing means, the image switching means, the switching timing setting means, the player identification means, the number comparing means, the player identification means, the numerical value comparing means, the hint image display control means, the providing means, the switching time setting means, the correct answer data storing, means, the comparing means, the data providing means, the image display control means, the difference image creating means, and so on. One or more of the ROM 43, the RAM 44, and the hard disk 46 may have functions as the play-number storing means, the winning-number storing means, the cumulative number-comparing storing means, the answer data storing means, the correct answer data storing means, the reference image data storing means, the difference image data storing means, the number-of-times-of-enlargement storing means, the number-of-times-of-enlargement storing means, the play history storing means, and so on. One or more of the ROM 43, the RAM 44, and the hard disk 46 may also store the plurality of correspondence data sets, and so on.

### [Terminal device configuration]

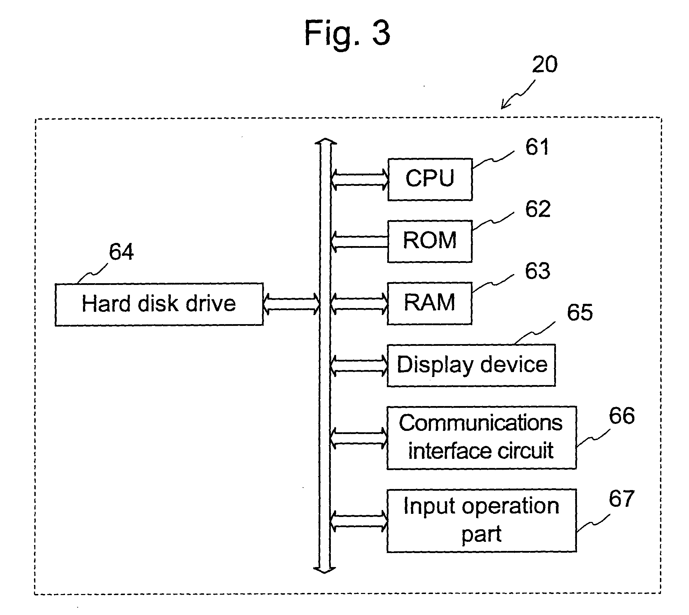

Next, a block diagram showing a configuration of a terminal device 20 of a part of a difference detection game system of the present embodiment will be shown in Fig. 3.

The terminal device 20 is composed of a CPU 61, a ROM 62, a RAM 63, a hard disk 64, a display device 65, a communication interface circuit 66, and an inputting operation part 67.

In the hard disk drive 64, programs to execute processes as will be described later are recorded. In addition, the communication interface circuit 66 is, as shown in Fig. 1, connected to the server 10 via the Internet so as to communicate therewith.

The aforementioned programs stored in the hard disk drive 64 include a program for communications with the server 10 and a program to display a game image distributed from the server 10 on the display device 65.

In addition, the inputting operation part 67 is for input of a part judged to be a difference in a difference detection game and for carrying out an operation to transmit the answer to the server 10.

Thus, the CPU 61, and the display device 65, and one or more of the ROM 62, the RAM 63, and the hard disk 64 may have functions as the image switching means, the image display means, the image selecting means, the corresponding image display means, and so on.

### [Action]

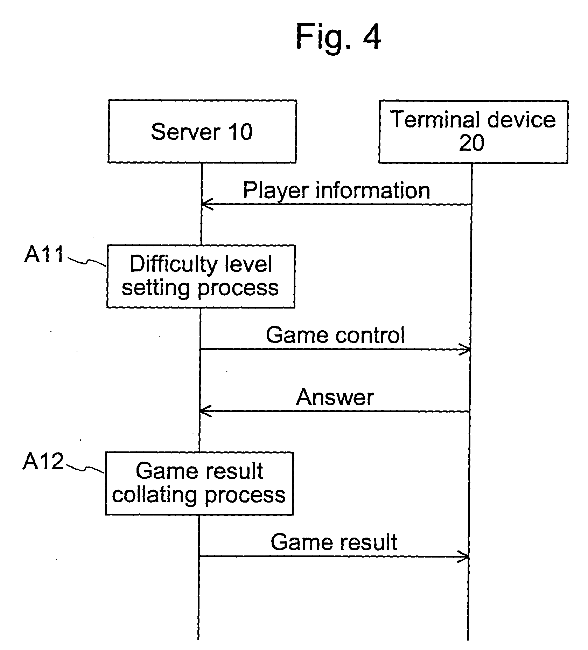

Next, based on a timing chart of Fig. 4, a description will be given of actions carried out between the server 10 and terminal device 20 of a difference detection game system according to the present embodiment.

First, when a difference detection game is started, player information to identify a player who plays the game on that terminal device 20 is transmitted from the terminal device 20 to the server 10.

Next, in the server 10, a process to set a difficulty level of the difference detection game is carried out (step A11). This difficulty level setting process is executed based on the contents of the player information. This difficulty level setting process will be described later.

When the process to set a difficulty level ends, a process to transmit signals to control the game from the server 10 to the terminal device 20 is executed. In the game control signals, signals to control progress in the difference detection game according to the difficulty level set in the former step A11 are mainly included.

Next, data concerning an answer of the difference detection game is transmitted from the terminal device 20 to the server 10. The answer has been inputted by the player, who plays the difference detection game on the terminal device 20, by means of input means provided on the terminal device 20.

When answer data is received, a game result collating process is executed in the server 10 (step A12). The game result collating process refers to a process to collate as to whether or not answer data transmitted from the terminal device 20 is a correct answer and to tabulate its point.

When the game result collating process ends, a game result is transmitted from the server 10 to the terminal device 20.

As in the above, in a difference detection game system according to the present embodiment, transmissions and receptions of data and signals are carried out while the server 10 and terminal device 20 are connected via communication lines.

### [Server processes]

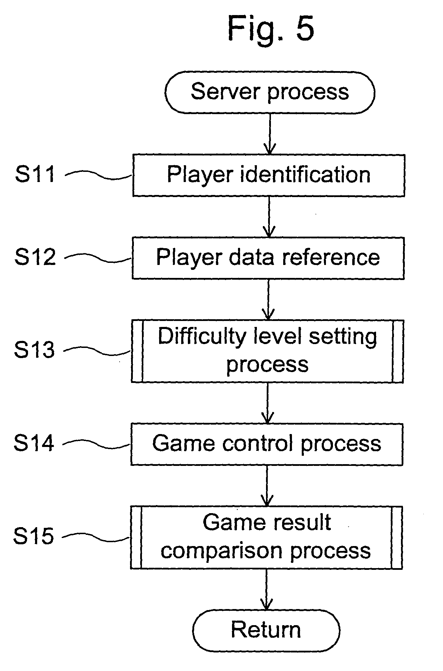

Next, based on a flowchart of Fig. 5, a description will be given of processes carried out in the server 10 of a difference detection game system according to the present embodiment.

First, the CPU 42 of the server 10 executes a process to identify a player (step S11).

The process to identify a player refers to a process to judge, based on information (identification number data) to identify a player transmitted from the terminal device 20, as to whether or not the player is a registered player. In this process, if a player who plays a difference detection game in the terminal device 20 is a player who has already been registered, the player is identified, and if he/she is a player who has not been registered yet, the player's initial registration is carried out. When the process to identify a player ends, the CPU 42 shifts the process to step S12.

Next, the CPU 42 executes a process to refer to player data (step S12).

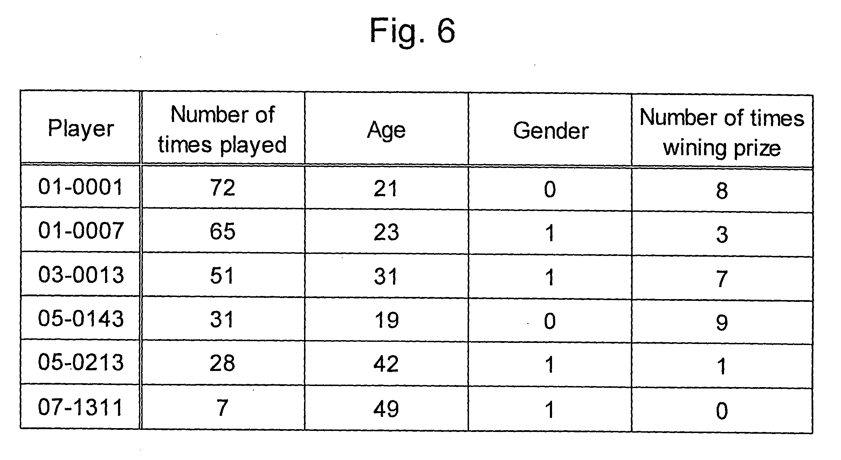

The player data refers to data which is recorded for each player identified in the former step S11, and this is, concretely, data as shown in Fig. 6. For this player data, as shown in Fig. 6, in addition to identification number data indicating each player, the number, of times the player has utilized difference detection games (number of times utilized), the player's age, gender, and number of times wining prizes are recorded.

Herein, such player data is stored and saved on the hard disk 46 of the server 10. Moreover, in the present embodiment, although players are managed in terms of the items shown in Fig. 6, the present invention is not limited hereto.

When the process to refer to player data ends, the CPU 42 shifts the process to step S13.

Next, the CPU 42 executes a process to set a difficulty level (step S13).

A "difficulty level" refers to an evaluation with an index of easiness in eliciting correct answers in a difference detection game. Herein, a "difficulty level" used in the present embodiment is not expressed as a concrete numerical value but is absolutely evaluated by rules of thumb.

In the present step's process, the server 10 of the present embodiment carries out, based on the contents of player data referred to in the former step S12, a difficulty level setting to match the player's level. The details of the difficulty level setting process will be described later. When the difficulty level setting process ends, the CPU 42 shifts the process to step S14.

Next, the CPU 42 executes a game control process (step S14).

The game control process refers to a process to carry out control of the whole difference detection game by transmitting control signals and data from the server 10 to the terminal device 20 based on the difficulty level set in the former step S13. Moreover, this game control process may be carried out in a condition where the server 10 and terminal device 20 are connected via a communication line or may utilize a game program prepared in the server 10 by downloading from the terminal device 20. When the process to control the game ends, the CPU 42 shifts the process to step S15.

Next, the CPU 42 executes a process to collate a game result (step S15).

The process to collate a game result refers to a process to collate an answer of the difference detection game transmitted from the terminal device 20 with a correct answer prepared in the server 10 and tabulate a point. In addition, the process also includes a process to transmit the collated result and tabulated point to the terminal device 20.

The CPU 42 records answer data from the terminal device 20, which has been received via the communication interface 45, on the RAM 44, collates the same with correct answer data read out from the hard disk 46, and judges as to whether or not the answer is correct. If it is judged that the answer is correct, a point concerning the correct answer is tabulated by the CPU 42.

Herein, in a difference detection game system of the present embodiment, a point according to a correct answer is tabulated simply based on a criterion of whether or not the answer is correct, however, the present invention is not limited hereto, and the point may be changed according to the speed at which the player elicits a correct answer, that is, the number of times of reproduction of the reference image and difference image.

In addition, the tabulated point is, in response to an instruction from the CPU 42, transmitted to the terminal device 20 via the communication interface 45. Concretely, together with a message "Congratulations on your winning oo points!", the point is displayed on the display device 65 of the terminal device 20. Moreover, if a difference detection game system such that a player can win a prize according to the point is utilized, a message such as "You won ΔΔ. Congratulations!" may be used.

When the above processes end, the CPU 42 immediately ends this subroutine.

### [Difficulty level setting process]

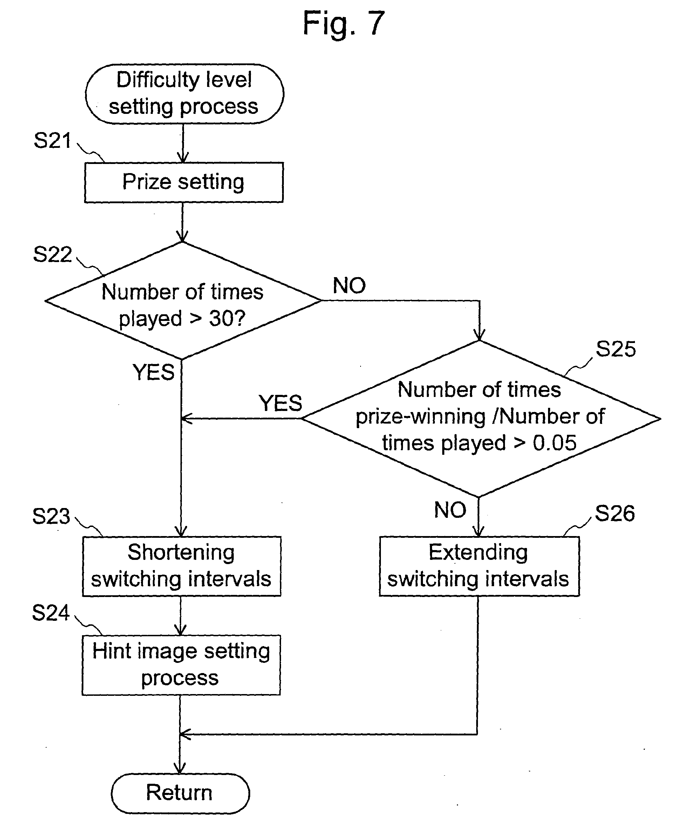

Next, based on Fig. 7, a description will be given of a subroutine of a difficulty level setting process, which is called up in the former step S13 of Fig. 5.

First, the CPU 42 executes a process to set a prize (step S21).

The process to set a prize refers to a process to set, based on the player data referred to in the former step S12 (refer to Fig. 5), a prize which fits the identified player's age and gender. In a difference detection game of the present embodiment, if the player answers a correct answer in a difference detection game, he/she can gain a point and/or a prize, and both of these may be given to the player, and either may be given to the player. When the process to set a prize ends, the CPU 42 shifts the process to step S22.

Next, a process to judge as to whether or not the number of times utilized is greater than 30 is executed (step S22).

The "number of times utilized" refers to the number of times in which the player has utilized a difference detection game system of the present embodiment, and this is, concretely, a numerical value in the item "number of times utilized" of the player data recorded on the hard disk 46 (refer to Fig. 6).

The CPU 42 refers to numerical value data recorded in the item of the concerned player's "number of times utilized" from the hard disk 46 and compares it with a numerical value 30. In the present step, if an affirmative result is obtained, this indicates that "the player frequently utilizes the concerned difference detection game," and at this time, the CPU 42 executes a process of step S23. On the other hand, if a negative result is obtained in the present step, this indicates that "the player does not frequently utilize the concerned difference detection game," and at this time, the CPU 42 executes a process of step S25.

Herein, in the present embodiment, a numerical value of 30 is employed as a criterion for measuring the greatness of frequency at which the player has utilized the concerned difference detection game system, however, the present invention is not limited hereto, and the criterion can be set by an administrator of the difference detection game system to a desirable value.

Next, the CPU 42 executes a process to shorten a switching time (step S23).

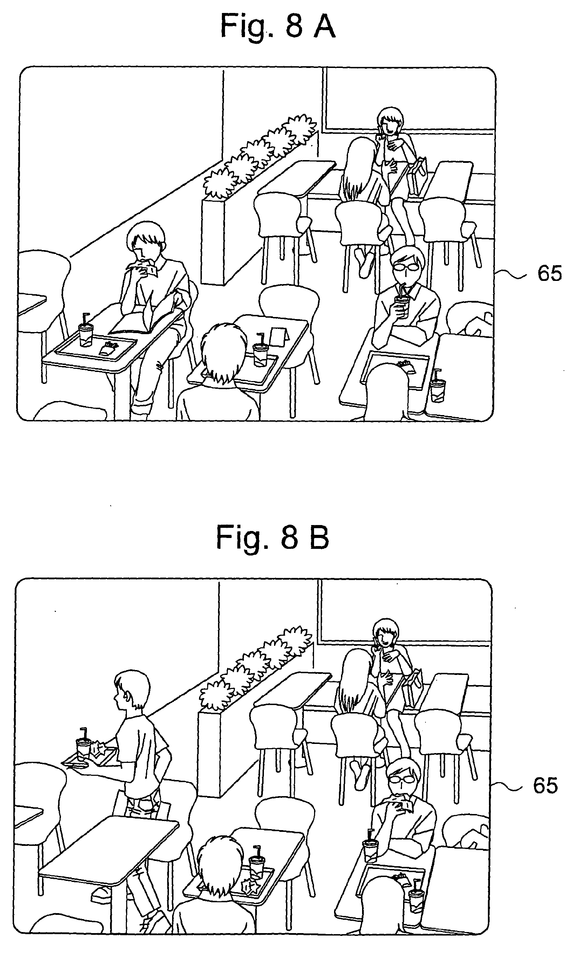

A "switching time" means a time for timing where a reference image for reference in a difference detection game and a difference image are switched over. In Figs. 8A and 8B, shown is a display example when a reference image and a difference image are displayed on the display device 65 of the terminal device 20. Fig. 8A is a display example of a reference image, and Fig. 8B is a display example of a difference image. These images are alternatively displayed on the display device 65 of the terminal device 20.

Herein, although, in Figs. 8A and 8B, the reference image and difference image have been drawn as if they were still images, a difference detection game of the present embodiment assumes that the game is played with animated images. In addition, since effects of the present invention are not necessarily ones that can be obtained only with animated images, the images may be still.

In the present step, intervals to alternatively display these are shortened, thus providing a condition where the player can easily elicit a correct answer. The CPU 42 sets a shortened switching time and controls, based thereon, display of the reference image and difference image. When the switching time shortening process ends, the CPU 42 shifts a process to step S24.

Next, the CPU 42 executes a process to set a hint image (step S24).

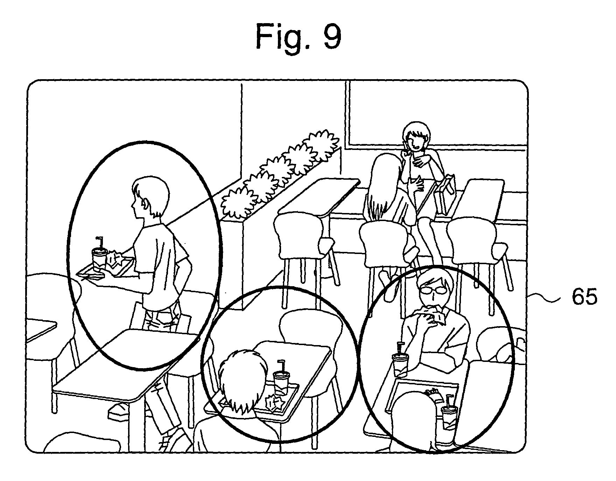

A "hint image" means an image where marks have been put in the vicinity of parts where differences exist. A display example of a hint image is shown in Fig. 9. In Fig. 9, parts which are different in the difference image of Fig. 8B compared with the reference image of Fig. 8A are circled. The player plays a difference detection game while referring to this hint image.

Similar to the image file of a difference detection game, the hint image has been recorded on the hard disk 46, and this is displayed based on an instruction from the CPU 42. When the process to set a hint image ends, the CPU 42 immediately ends this subroutine.

By carrying out processes from step S22 to step S24, in a difference detection game system of the present embodiment, it becomes possible to refer to utilization frequency of a player who utilizes the same, judge a game player whose utilization frequency is high to be a "frequent user," and lower the difficulty level of the game.

On the other hand, in step S22, if it is judged that the number of times utilized has not exceeded 30, the CPU 42 executes a process to judge as to whether or not a number of times winning prizes/a number of times utilized is greater than 0.05 (step S25) .

In the present step's process, the CPU 42 tabulates a number of times winning prizes/a number of times utilized and compares the same with a reference value of 0.05, whereby the greatness of frequency at which the player has won prizes is judged. Concretely, the CPU 42 reads out, out of the table shown in Fig. 6, numerical value data recorded in the item "number of times utilized" and numerical value data recorded in the item "number of times winning prizes," carries out, based on the values, a process to tabulate a number of times winning prizes/a number of times utilized, and compares the same with a reference value of 0.05.

If an affirmative result is obtained in the present step, this indicates that the frequency of a player' s winning prizes is high, and at this time, the CPU 42 shifts the process to step S23. On the other hand, if a negative result is obtained in the present step, this indicates that the frequency of a player' s winning prizes is low, and at this time, the CPU 42 shifts the process to step S26.

Herein, in the present embodiment, the numerical value of 0.05 is employed as a criterion for measuring the greatness of frequency at which the player has won prizes, however, the present invention is not limited hereto, and the criterion may be set by an administrator of the difference detection game system to a desirable value. Moreover, in the present embodiment, a game condition is changed depending on the state of a player's winning "prizes," however, the present invention is not limited hereto, and a game condition may be changed by the state of a player's winning "points."

Next, the CPU 42 executes a process to extend a switching time (step S26).

A "switching time" refers to, as described above, a time for timing where a reference image for reference in a difference detection game and a difference image are switched over. In the present step, intervals to alternatively display these are extended, thus providing a condition where the player cannot easily elicit a correct answer. The CPU 42 sets an extended switching time and controls, based thereon, display of the reference image and difference image. When the switching time extending process ends, the CPU 42 immediately ends this subroutine.

By the above processes, in a difference detection game system of the present embodiment, it becomes possible to change a difference detection game difficulty level according to the player's utilization frequency and state of winning prizes (points).

### [Terminal device processes]

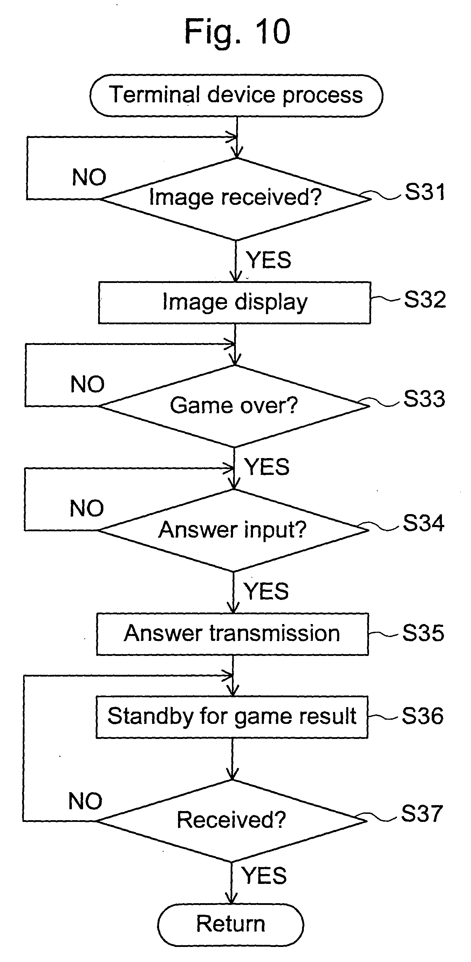

Next, with reference to Fig. 10, a description will be given of processes carried out in the terminal device 20.

The CPU 61 of the terminal device 20 executes a process to judge as to whether or not images have been received (step S31).

The images mean a reference image for reference in difference detection and a difference image. These images are, in the present embodiment, animated images as described above and are distributed from the server 10 via a communication line . If it is judged that the images have not been received, the CPU 61 carries out a determination of step S31 again. On the other hand, if it is judged that the images have been received, the CPU 61 shifts the process to step S32.

Next, the CPU 61 executes a process to display images (step S32).

The process to display images refers to a process to display images received in the former step S31 on the display device 65 of the terminal device 20. This image displaying process is, as described above, for displaying these images on the display device 65 in accordance with switching timing determined in the server 10. When the process to display images ends, the CPU 61 shifts the process to step S33.

Next, a process to judge as to whether or not a game has been finished is executed (step S33).

A determination as to whether or not a game has been finished is carried out based on whether or not the CPU 61 has ended processes to switch over images. In a difference detection game of the present embodiment, a time or a number of times in which images are displayed for the player has been set, and when this predetermined time or number of times is completed, the process to display images on the display device 65 is finished. Thereby, the CPU 61 detects that the game has been finished. If it is judged that the game has not been finished, the CPU 61 carries out a process of step S33 again. On the other hand, if it is judged that the game has been finished, the CPU 61 shifts the process to step S34.

Next, the CPU 61 executes a process to judge as to whether or not an answer has been inputted (step S34).

In a difference detection game of the present invention, as described above, a difference detection game is played with animated images. When a player inputs an answer of the difference detection game, this is carried out in such a manner as to stop, when a difference is displayed in the animated image, the image at this part and point out the difference part by an operation of the inputting operation part 67.

In the present step, the CPU 61 judges as to whether or not the player playing the difference detection game has inputted an answer of the game through the inputting operation part 67 of the terminal device 20. If it is judged that no answer has been inputted, the CPU 61 carries out a determination of step S34 again. On the other hand, if it is judged that an answer has been inputted, the CPU 61 shifts the process to step S35.

Next, the CPU 61 executes a process to transmit an answer (step S35).

In the present step, answer data inputted by the player in step S34 is transmitted via the communication interface circuit 66 of the terminal device 20 to the server 10. When the process to transmit an answer ends, the CPU 61 shifts the process to step S36.

Next, the CPU 61 shifts to a standby mode for a game result (step S36).

Herein, the "game result" refers to an incoming game result which is transmitted from the server 10 in response to a player's answer transmitted to the server 10 in the former step S35, that is, whether or not the answer was correct, and a point if the answer was correct. In the present step, the terminal device 20 is in a standby mode for this incoming game result transmitted from the server 10.

Next, the CPU 61 executes a process to judge as to whether or not a game result has been received (step S37).

In the present step, if it is judged that a game result has not been received, the CPU 61 returns the process to step S36 again and shifts to a standby mode for a game result. On the other hand, in the present step, if it is judged that a game result has been received, the CPU 61 displays the game result on the display device 65 of the terminal device 20 then immediately ends this subroutine.

Moreover, in the above description, difficulty level setting of a difference detection game is carried out by adjusting the switching time between a reference image and a difference image, however, the present invention is not limited hereto, and difficulty level setting can also be carried out by a method as described in the following, whereby the object of the present invention can be realized.

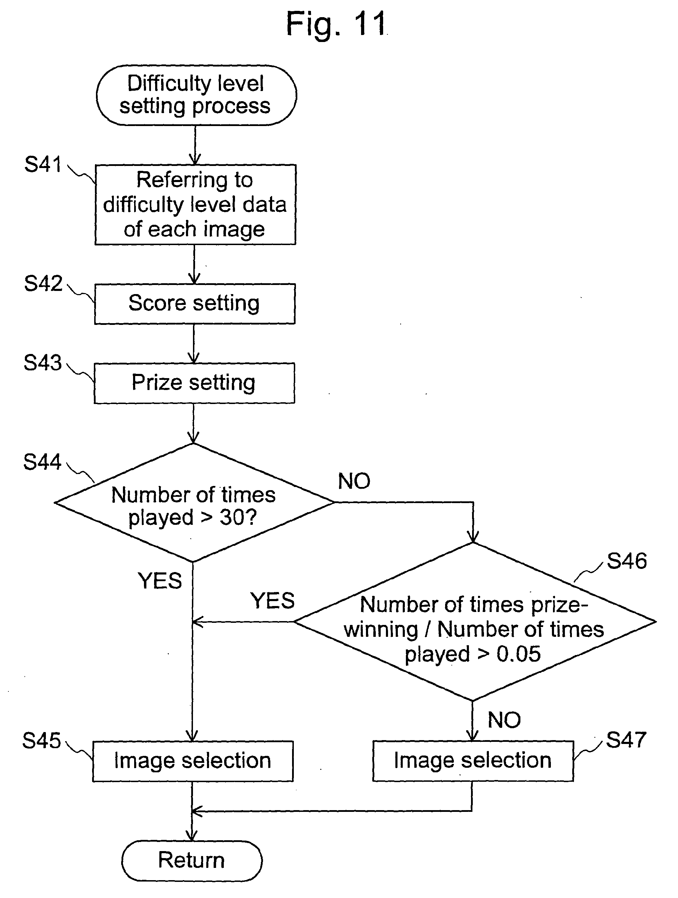

Hereinafter, based on Fig. 11, another embodiment of the difficulty level setting process will be-described. In the following embodiment, a description will be given of a difference detection game system wherein a difference detection game is structured so that a plurality of difference images have been prepared in advance in regard to one reference image and the game is proceeded by displaying the reference image andplurality of difference images in a lump on the terminal device and selecting a difference image which the player wishes to answer.

Fig. 11 is a flowchart concerning processes executed in the server 10.

First, the CPU 42 of the server 10 executes a process to refer to the difficulty level data of each image (step S41).

As described above, in a difference detection game of the present embodiment, a plurality of difference images have been prepared. These difference images are different in difficulty levels (easiness in eliciting a correct answer) depending on the types, and as will be described later, points and prizes have been set according to difficulty levels of these. In the present step, the CPU 42 carries out a process to read out difficulty level data provided for each difference image from the hard disk 46. When the process to refer to difficulty level data ends, the CPU 42 shifts the process to step S42.

Next, the CPU 42 executes a process to set a point (step S42).

The point setting process refers to a process to set, based on difficulty level data of each difference image referred to in the former step S41, a point according to the difficulty level. When the point setting process ends, the CPU 42 shifts the process to step S43.

Next, the CPU 42 executes a process to set a prize (step S43).

The process to set a prize refers to a process to set, based on a point of each difference image set in the former step S42, a prize suitable for the point. In a difference detection game system of the present embodiment, if the player answers a correct answer in a difference detection game, he/she can gain a point and/or a prize, and both of these may be given to the player, and either may be given to the player. When the process to set a prize ends, the CPU 42 shifts the process to step S44.

Next, a process to judge as to whether or not the number of times utilized is greater than 30 is executed (step S44).

A "number of times utilized" refers to a number of times in which the player has utilized a difference detection game system of the present embodiment, and this is, concretely, a numerical value in the item "number of times utilized" of the player data recorded on the hard disk 46 (refer to Fig. 6).

The CPU 42 refers to numerical value data recorded in the item of the concerned player's "number of times utilized" from the hard disk 46 and compares it with a numerical value 30. In the present step, if an affirmative result is obtained in the present step, this indicates that "the player frequently utilizes the concerned difference detection game," and at this time, the CPU 42 executes a process of step S45. On the other hand, if a negative result is obtained in the present step, this indicates that "the player does not frequently utilize the concerned difference detection game," and at this time, the CPU 42 executes a process of step S46.

Herein, in the present embodiment, a numerical value of 30 is employed as a criterion for measuring the greatness of frequency at which the player has utilized the concerned difference detection game system, however, the present invention is not limited hereto, and the criterion can be set by an administrator of the difference detection game system to a desirable value.

Next, the CPU 42 executes a process to select an image (step S45).

"Image selection" is a process to determine, out of a plurality of difference images prepared for the player's answering in a difference detection game, which difference image to display for the player. In a difference detection game of the present embodiment, the game's difficulty level is changed according to the utilization frequency of a player utilizing the same. In a difference detection game where a plurality of difference detection images have been prepared in advance, such a change in difficulty levels is carried out by carrying out a process to select and display, for a so-called "frequent user," an image of a low difficulty level.

Concretely, the CPU 42 selects, based on difficulty level data referred to in the former step S41, images of a low difficulty level and these are displayed on the display device 65 of the terminal device 20.

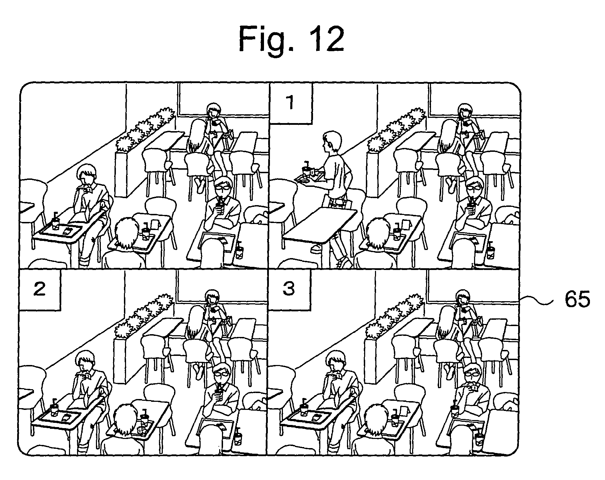

Moreover, in Fig. 12, illustrated is an example where three types of selected difference images are displayed on the display device 65. In Fig. 12, the reference image is displayed in the upper left, and the three types of difference images are displayed in the upper right, lower left, and lower right. Numbers "1," "2," " and "3" are used for the respective difference images, and by specifying this number, the player can select a difference image with which he/she plays a difference detection game.

Herein, although, in Fig. 12, the reference image and difference images have been drawn as if they were still images, a difference detection game of the present embodiment assumes that the game is played with animated images. In addition, since effects of the present invention are not necessarily ones that can be obtained only with animated images, the images may be still.

By carrying out processes of step S44 and step S45, in a difference detection game system of the present embodiment, it becomes possible to refer to utilization frequency of a player who utilizes the same, judge a game player whose utilization frequency is high to be a "frequent user," and lower the difficulty level of the game.

When the process to select an image of step S45 ends, the CPU 42 immediately ends this subroutine.

On the other hand, in step S44, if it is judged that the number of times utilized has not exceeded 30, the CPU 42 executes a process to judge as to whether or not a number of times winning prizes/a number of times utilized is greater than 0.05 (step S46) .

In the present step's process, the CPU 42 tabulates a number of times winning prizes/a number of times utilized and compares the same with a reference value of 0.05, whereby the greatness of frequency at which the player has won prizes is judged. Concretely, the CPU 42 reads out, out of the table shown in Fig. 6, numerical data recorded in the item "number of times utilized" and numerical data recorded in the item "number of times winning prizes," carries out, based on the values, a process to tabulate a number of times winning prizes/a number of times utilized, and compares the same with a reference value of 0.05.

If an affirmative result is obtained in the present step, this indicates that the frequency of a player' s winning prizes is high, and at this time, the CPU 42 shifts the process to step S23. On the other hand, if a negative result is obtained in the present step, this indicates that the frequency of a player' s winning prizes is low, and at this time, the CPU 42 shifts the process to step S26.

Herein, in the present embodiment, the numerical value of 0.05 is employed as a criterion for measuring the greatness of frequency at which the player has won prizes, however, the present-invention is not limited hereto, and the criterion may be set by an administrator of the difference detection game system to a desirable value. Moreover, in the present embodiment, a game condition is changed depending on the state of a player's winning "prizes," however, the present invention is not limited hereto, and a game condition may be changed by the a state of a player's winning "points."

Next, the CPU 42 executes a process to select an image (step S47).

"Image selection" is a process to determine, out of a plurality of difference images prepared for the player's answering in a difference detection game, which difference image to display for the player. Concretely, based on the difficulty level data referred to in the former step S41, the CPU 42 selects an image of a high difficulty level and displays this image on the display device 65 of the terminal device 20. When the process to select an image ends, the CPU 42 immediately ends this subroutine.

By the above processes, in a difference detection game system of the present embodiment, it becomes possible to change a difference detection game difficulty level according to the player's utilization frequency and state of winning prizes (points).

### [Embodiment where a game picture which a player played is used as a difference image]

In the above embodiment, as the animated images used as difference images, animated images formed to use in a difference detection game system of the present invention are used, however, a difference detection game of the present invention may be performed by letting a player play some game (for example, an action game such as a racing game) in advance and then combining a reproduced picture thereof with a difference image. Hereinafter, a description will be given for an embodiment where after a player plays a racing game, the player plays a difference detection game by means of a reproduced image thereof.

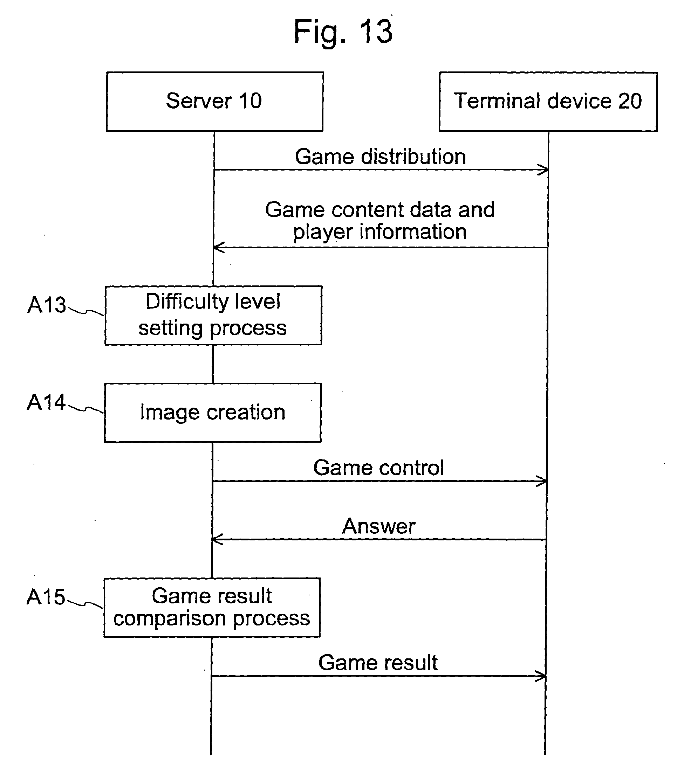

Fig. 13 is a timing chart for explaining, in a difference detection game system of the present embodiment where a picture of a game played by a player is used, an outline of signal exchanges between the server 10 and terminal device 20.

First, from the server 10 to the terminal device 20, a racing game is distributed via the Internet.

On the terminal device 20, a player plays the racing game distributed from the server 10 and transmits data of the game contents and player information to identify the player to the server 10.

Next, in the server 10, a process to set a difficulty level of the difference detection game is executed (step A13). This difficulty level setting process is executed based on the contents of the player information. This difficulty level setting process will be described later.

Next, in the server 10, a process to create an image is carried out (step A14). In this process, a difference image is created based on incoming game contents data transmitted from the player's terminal device 20.

When the process to create an image ends, a process to transmit signals to control the game from the server 10 to the terminal device 20 is executed. In the game control signals, signals to control progress in the difference detection game according to the difficulty level set in the former step A13 are mainly included.

Next, data concerning an answer of the difference detection game is transmitted from the terminal device 20 to the server 10. The answer has been inputted by the player, who plays the difference detection game on the terminal device 20, by means of input means provided on the terminal device 20.

When answer data is received, a game result collating process is executed in the server 10 (step A15) . The game result collating process refers to a process to collate as to whether or not answer data transmitted from the terminal device 20 is a correct answer and to tabulate its point.

When the game result collating process ends, a game result is transmitted from the server 10 to the terminal device 20.

As in the above, in a difference detection game system according to the present embodiment, transmissions and receptions of data and signals are carried out while the server 10 and terminal device 20 are connected via a communication line.

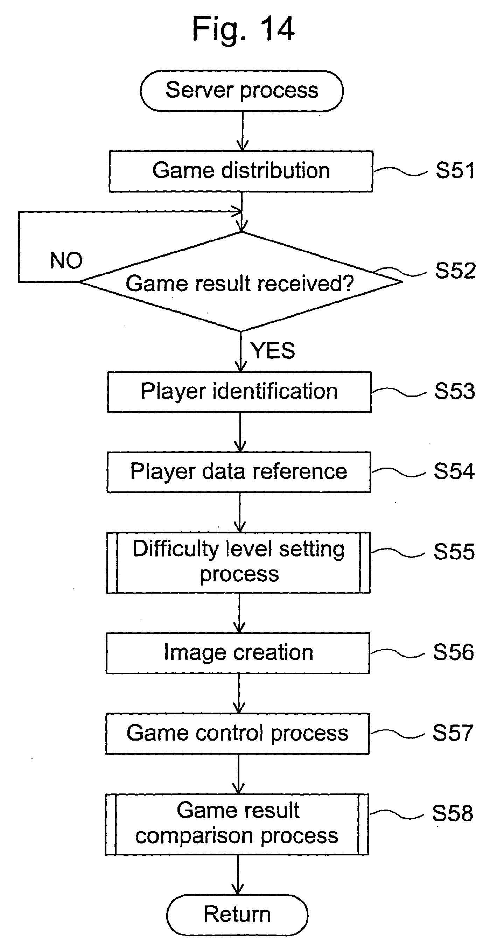

Next, based on Fig. 14, a description will be given of processes to be carried out in the server 10 when a difference detection game is played based on an image of a racing game which has been played by a player.

First, the CPU 42 of the server 10 carries out a process to distribute a game (step S51).

In the present step's process, the CPU 42 distributes racing game data to the terminal device 20 via the communication interface 45 and the Internet. A player who has received the distributed racing game plays this game and transmits a game result to the server 10. When the process to distribute a game ends, the CPU 42 shifts the process to step S52.

Next, the CPU 42 executes a process to judge as to whether or not a game result has been received (step S52).

As described above, from the player who played a racing game on the terminal device 20, data related to its game result is transmitted to the server 10 . The CPU 42 judges as to whether or not this game result has been received. If it is judged that the game result has not been received, the CPU 42 returns to step S52 again. On the other hand, if it is judged that the game result has been received, the CPU 42 shifts the process to step S53.

Next, the CPU 42 executes a process to identify the player (step S53).

The process to identify a player refers to a process to judge, based on information (identification number data) to identify a player transmitted together with a game result from the terminal device 20, as to whether or not the player is a registered player. In this process, if a player who plays a difference detection game in the terminal device 20 is a player who has already been registered, the player is identified, and if he/she is a player who has not been registered yet, the player's initial registration is carried out. When the process to identify a player ends, the CPU 42 shifts the process to step S12.

Next, the CPU 42 executes a process to refer to player data (step S54).

The player data refers to data which is recorded for each player identified in the former step S53, and this is, concretely, data as shown in Fig. 6. For this player data, in addition to identification number data indicating each player, the number of times the player has utilized difference detection games (number of times utilized), the player's age, gender, and number of times wining prizes are recorded.

Herein, such player data is stored and saved on the hard disk 46 of the server 10 . Moreover, in the present embodiment, although players are managed in terms of the items shown in Fig. 6, the present invention is not limited hereto. When the process to refer to player data ends, the CPU 42 shifts the process to step S55.

Next, the CPU 42 executes a process to set a difficulty level (step S55).

In the present step's process, the server 10 of the present invention carries out, based on the contents of player data referred to in the former step S54, a difficulty level setting to match the player's level. Concerning the details of the difficulty level setting process, the method as described above can be mentioned. When the difficulty level setting process ends, the CPU 42 shifts the process to step S56.

Next, the CPU 42 executes a process to create an image (step S56).

The process to create an image refers to, as described above, a process to create a difference image based on the game result of a racing game received from the terminal device 20 in the former step S52. A difference image is created by carrying out, based on a game image of a racing game played by the player, a process such as, for example, to compose a difference image or to make its racing course different from the course of the former game.

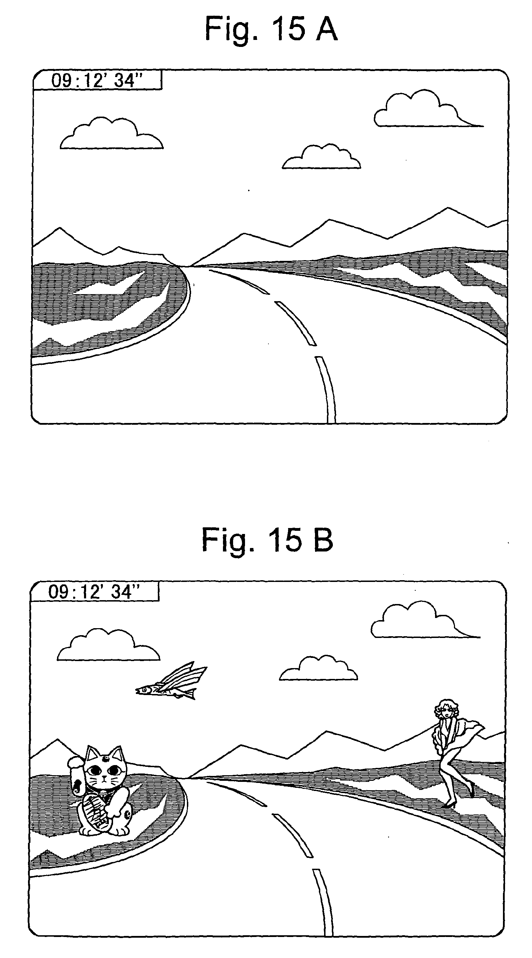

In Figs. 15A and 15B, examples of created difference images are shown. Fig. 15A is a picture image of the racing game played by a player. On the other hand, Fig. 15B is an example of a difference image created based thereon. In Fig. 15B, by combining a factitious object image with the racing course, a difference image is created. Based on the difference image created as such, the player carries out a difference detection game. When the process to create a difference image ends, the CPU 42 shifts the process to step S57.

Next, the CPU 42 executes a game control process (step S57).

The game control process refers to a process to carry out control of the whole difference detection game by transmitting control signals and data from the server 10 to the terminal device 20 based on the difficulty level set in the former step S55. Moreover, this game control process may be carried out in a condition where the server 10 and terminal device 20 are connected via a communication line or may utilize a game program prepared in the server 10 by downloading from the terminal device 20. When the process to control the game ends, the CPU 42 shifts the process to step S58.

Next, the CPU 42 executes a process to collate a game result (step S58).

The process to collate a game result includes a process to collate an answer of the difference detection game transmitted from the terminal device 20 with a correct answer prepared in the server 10 and tabulate a point. In addition, the process also includes a process to transmit the collated result and tabulated point to the terminal device 20.

The CPU 42 records answer data from the terminal device 20, which has been received via the communication interface 45, in the RAM 44, collates the same with correct answer data read out from the hard disk 46, and judges as to whether or not the answer is correct. If it is judged that the answer is correct, a point concerning the correct answer is tabulated by the CPU 42.

Herein, in a difference detection game system of the present embodiment, a point according to a correct answer is tabulated simply based on a criterion of whether or not the answer is correct, however, the present invention is not limited hereto, and the point may be changed according to the speed at which the player elicits a correct answer, that is, the number of times of reproduction of the reference image and difference image.

In addition, the tabulated point is, in response to an instruction from the CPU 42, transmitted to the terminal device 20 via the communication interface 45. Concretely, together with a message "Congratulations on your winning oo points!", the point is displayed on the display device 65 of the terminal device 20. Moreover, if a difference detection game system such that a player can win a prize according to the point is utilized, a message such as "You won ΔΔ. Congratulations!" may be used.

When the above processes end, the CPU 42 immediately ends this subroutine.

By carrying out a series of processes as described above, it becomes possible to let a player play two types of games, namely, to let a player play some type of game and let the player play a difference detection game by means of a reproduced picture of that game. Thereby, compared to a conventional game composed of a single game, the player can experience twofold enjoyment.

In addition, a difference detection game of the present embodiment can also be played as a strategy for promoting sales of a game which is played by a player in advance.

### <<Second embodiment>>

In the above embodiment, a description is given on the premise that a terminal device such as a personal computer is used as a device to execute a difference detection game system of the present invention, however, the present invention is not limited hereto, and a difference detection game may be played on a portable terminal device such as a cellular telephone.

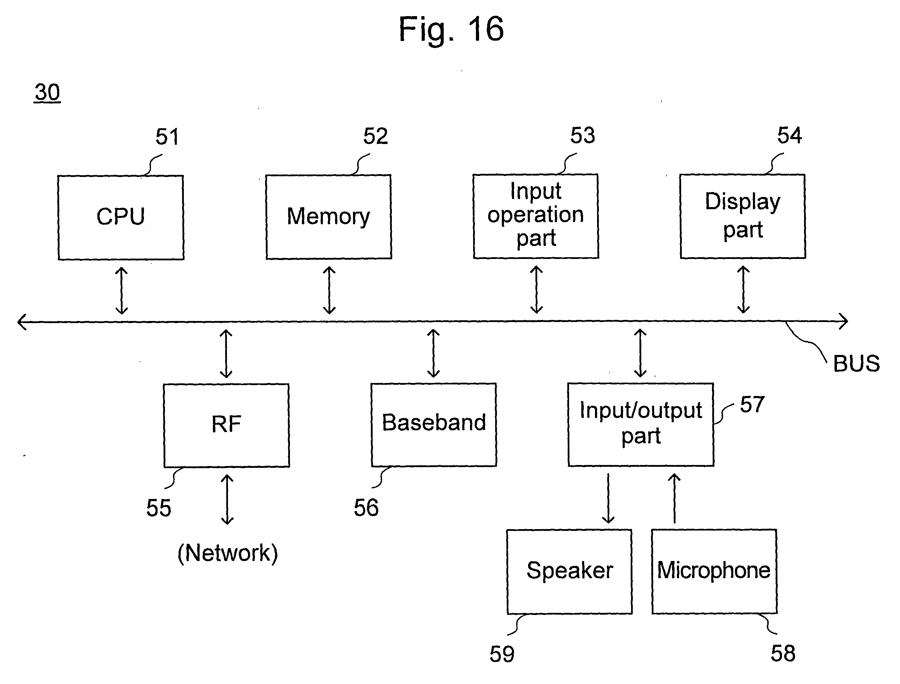

Hereinafter, by means of Fig. 16 through Fig. 19, and Figs. 20A and 20B, a description will be given to an embodiment where a difference detection game system of the present invention is implemented by a cellular telephone.

### [Cellular telephone configuration]

A block diagram showing a configuration of a cellular telephone of a part of a difference detection game system of the present embodiment is shown in Fig. 16.

As shown in Fig. 16 , to a data bus of the cellular telephone 30 according to the present embodiment, connected are a CPU 51, a memory 52, an RF (transmitting/receiving circuit part) 55 for signal transmissions and receptions with its base station, a base band processing part 56 for converting an RF signal received at the transmitting/receiving circuit part 55 to a base band signal and converting a base band signal to be transmitted to an RF signal, an input/output part 57 being an interface with a microphone 56 and a speaker 59, a display 54 composed of a liquid crystal panel or the like, and an inputting operation part 53 formed of a keyboard and a jog dial and the like.

The CPU 51 is structured so as to carry out various actions according to action programs stored in the memory 52 and controls the respective circuit potions according to such actions. The contents of various processes of the CPU 51 are displayed on the display 54 as necessary.

In addition, the CPU 51 converts various types of information (character information, information on a specific selection, etc.) inputted by a user's operation of the inputting operation part 53 to packet data, and then transmits the same to the server 10 via the base band processing part 56 and RF (transmitting/receiving circuit part) 55.

In addition, the CPU 51 takes in an RF signal, on which has been superimposed packetized data information transmitted from the server 10 via a packet network/PDC network (not shown), via the transmitting/receiving circuit part 55 and the base band processing part 56, pieces the packetized data together so as to return to their original data form, and then displays the same on the display 54.

Thus, a user of the cellular telephone 30 can transfer various types of information with the server 10. Upon request (a request concerning a required amount of information and frequency) of the cellular telephone 30, the server 10 transmits a difference detection game to the cellular telephone 30.

### [Action]

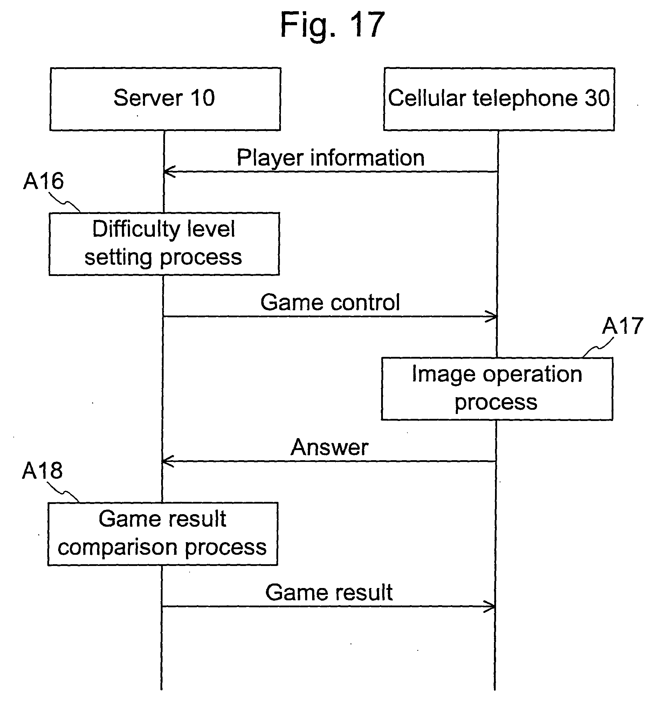

Next, based on a timing chart of Fig. 17, a description will be given of actions carried out between the server 10 and cellular telephone 30 of a difference detection game system according to the present embodiment.

First, when a difference detection game is started, player information to identify a player who plays the game on that cellular telephone 30 is transmitted from the cellular telephone 30 to the server 10.

Next, in the server 10, a process to set a difficulty level of the difference detection game is carried out (step A16). This difficulty level setting process is executed based on the contents of the player information. This difficulty level setting process is carried out based on the method as described above.

When the process to set a difficulty level ends, a process to transmit signals to control the game from the server 10 to cellular telephone 30 is executed. In the game control signals, signals to control progress in the difference detection game according to the difficulty level set in the former step A16 are mainly included.

Next, in the cellular telephone 30, an image operating process is carried out (step A17). The image operating process is, as will be described later, a process required when the player plays a difference detection game by means of a small display screen of the cellular telephone 30. The details of the image operating process will be described later.

Next, data concerning an answer of the difference detection game is transmitted from the cellular telephone 30 to the server 10. The answer has been inputted by the player, who plays the difference detection game on the cellular telephone 30, by means of an input operating part 53 provided on the cellular telephone 30.

When answer data is received, a game result collating process is executed in the server 10 (step A18). The game result collating process refers to a process to collate as to whether or not answer data transmitted from the cellular telephone 30 is a correct answer and to tabulate its point.

When the game result collating process ends, a game result is transmitted from the server 10 to the cellular telephone 30.

As in the above, in a difference detection game system according to the present embodiment, transmissions and receptions of data and signals are carried out while the server 10 and cellular telephone 30 are connected via the a communication line.

### [Server processes]

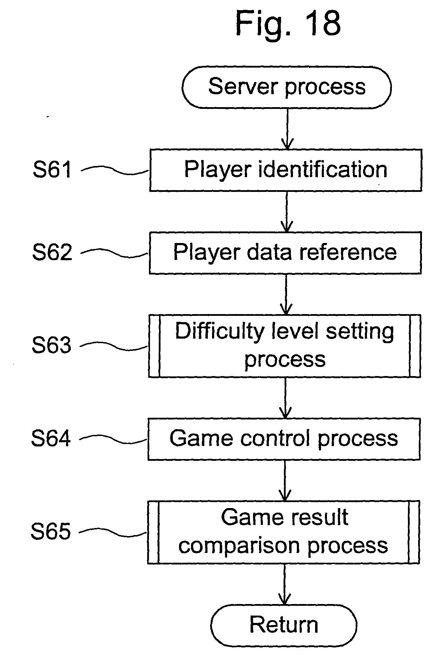

Next, based on a flowchart of Fig. 18, a description will be given of processes carried out in the server 10 of a difference detection game system according to the present embodiment.

First, the CPU 42 of the server 10 executes a process to identify a player (step S61).

The process to identify a player refers to a process to judge, based on information (identification number data) to identify a player transmitted from the cellular telephone 30, as to whether or not the player is a registered player. In this process, if a player who plays a difference detection game in the cellular telephone 30 is a player who has already been registered, the player is identified, and if he/she is a player who has not been registered yet, the player's initial registration is carried out. When the process to identify a player ends, the CPU 42 shifts the process to step S62.

Next, the CPU 42 executes a process to refer to player data (step S62).

The player data refers to data which is recorded for each player identified in the former step S61, and this is, concretely, as shown in the foregoing Fig. 6. In this player data, as shown in Fig. 6, in addition to identification number data indicating each player, the number of times the player has utilized difference detection games (number of times utilized), the player's age, gender, and number of times wining prizes have been recorded.

Herein, such player data is stored and saved on the hard disk 46 of the server 10. Moreover, in the present embodiment, although players are managed in terms of the items shown in Fig. 6, the present invention is not limited hereto.

When the process to refer to player data ends, the CPU 42 shifts the process to step S63.

Next, the CPU 42 executes a process to set a difficulty level (step S63).

A "difficulty level" refers to an evaluation with an index of easiness in eliciting correct answers in a difference detection game. Herein, a "difficulty level" used in the present embodiment is not expressed as a concrete numerical value but is absolutely evaluated by rule of thumb.

In the present step's process, the server 10 of the present embodiment carries out, based on the contents of player data referred to in the former step S62, a difficulty level setting to match the player's level. The details of the difficulty level setting process will be described later. When the difficulty level setting process ends, the CPU 42 shifts the process to step S64.

Next, the CPU 42 executes a game control process (step S64) .

The game control process refers to a process to carry out control of the whole difference detection game by transmitting control signals and data from the server 10 to the cellular telephone 30 based on the difficulty level set in the former step S63. Moreover, this game control process may be carried out in a condition where the server 10 and cellular telephone 30 are connected via a communication line or may utilize a game program prepared in the server 10 by downloading from the cellular telephone 30. When the process to control the game ends, the CPU 42 shifts the process to step S65.

Next, the CPU 42 executes a process to collate a game result (step S65).

The process to collate a game result includes a process to collate an answer of the difference detection game transmitted from the cellular telephone 30 with a correct answer prepared in the server 10 and tabulate a point. In addition, the process also includes a process to transmit the collated result and tabulated point to the cellular telephone 30.

The CPU 42 records answer data from the cellular telephone 30, which has been received via the communication interface 45, in the RAM 44, collates the same with correct answer data read out from the hard disk 46, and judges as to whether or not the answer is correct. If it is judged that the answer is correct, a point concerning the correct answer is tabulated by the CPU 42.

Herein, in a difference detection game system of the present embodiment, a point according to a correct answer is tabulated simply based on a criterion of whether or not the answer is correct, however, the present invention is not limited hereto, and the point may be changed according to the speed at which the player elicits a correct answer, that is , the number of times of reproduction of the reference image and difference image.

Furthermore, the point may be changed according to the number of times in which the difference image has been enlarged.

In addition, the tabulated point is, in response to an instruction from the CPU 42, transmitted to the cellular telephone 30 via the communication interface 45. Concretely, together with a message "Congratulations on your winning oo points! ," the point is displayed on the display 54 of the cellular telephone 30. Moreover, if a difference detection game system such that a player can win a prize according to the point is utilized, a message such as "You won ΔΔ. Congratulations!" may be used.

When the above processes end, the CPU 42 immediately ends this subroutine.

### [Cellular telephone processes]

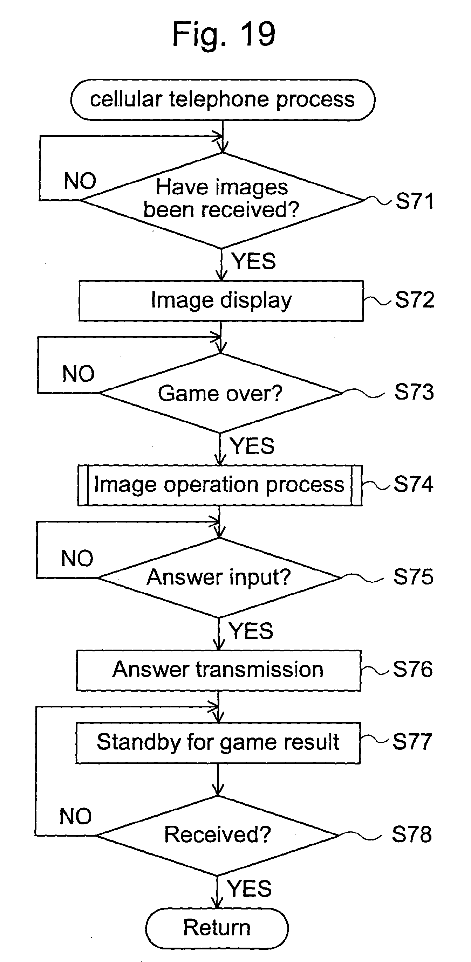

Next, with reference to Fig. 19, a description will be given of processes carried out in the cellular telephone 30.

The CPU 51 of the cellular telephone 30 executes a process to judge as to whether or not images have been received (step S71).

The images mean a reference image for reference in difference detection and a difference image. These images are, in the present embodiment, animated images as described above and are distributed from the server 10 via a communication line . If it is judged that the images have not been received, the CPU 51 carries out a determination of step S71 again. On the other hand, if it is judged that the images have been received, the CPU 51 shifts the process to step S72.

Next, the CPU 51 executes a process to display images (step S72).

The process to display images refers to aprocess to display images received in the former step S71 on the display 54 of the cellular telephone 30. This image displaying process is, as described above, for displaying these images on the display 54 in accordance with switching timing determined in the server 10. When the process to display images ends, the CPU 51 shifts the process to step S73.

Next, a process to judge as to whether or not a game has been finished is executed (step S73).

A determination as to whether or not a game has been finished is carried out based on whether or not the CPU 51 has ended processes to switch over images. In a difference detection game of the present embodiment, a time or a number of times in which images are displayed for the player has been set, and when this predetermined time or number of times is completed, the process to display images on the display 54 is finished. Thereby, the CPU 51 detects that the game has been finished. If it is judged that the game has not been finished, the CPU 51 carries out a process of step S73 again. On the other hand, if it is judged that the game has been finished, the CPU 51 shifts the process to step S74.

Next, the CPU 51 executes an image operating process (step S74).

The image operating process is, as described above, a process carried out since the display screen that corresponds to the display 54 of the cellular telephone 30 is too small to play a difference detection game, and is carried out by a player's operation of the inputting operation part 53.

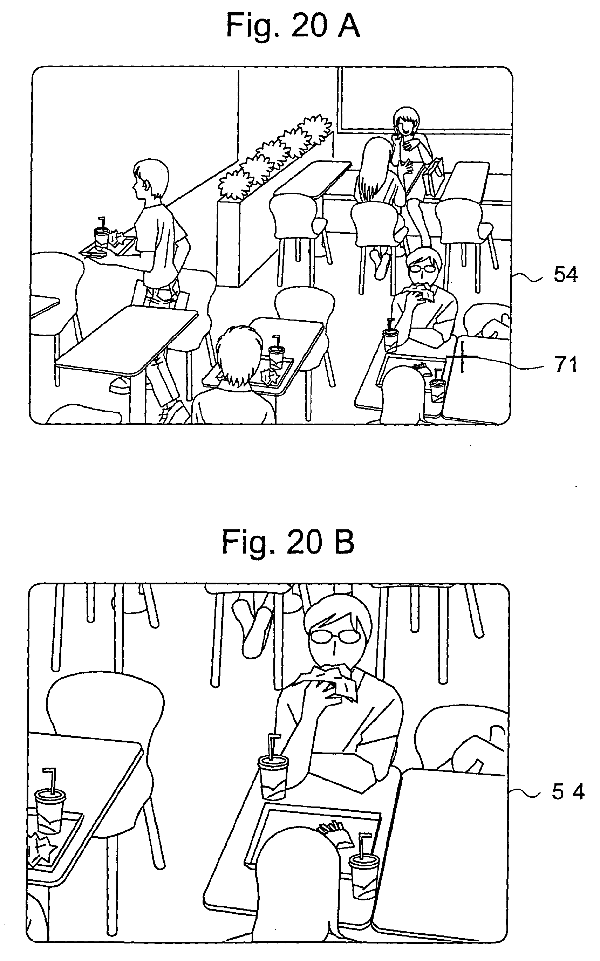

In Figs. 20A and 20B, examples of difference images displayed on the display 54 of the cellular telephone 30 are shown. Fig. 20A is an example where a difference image is displayed on the display 54. As shown in Fig. 20A, a cursor 71 is displayed in the difference image. The player can shift this cursor 71 by operating the inputting operation part 53 of the cellular telephone 30 and can display the screen in the vicinity of the cursor 71 in an enlarged manner further by operating to depress the inputting operation part 53. Fig. 20B is a display example when the difference image is enlarged at a cursor 71 position shown in Fig. 20A.

By such a configuration, in a difference detection game system of the present embodiment, a difference detection game can be enjoyed even on a cellular telephone with a small display screen. In addition, by enabling playing a difference detection game on portable terminal devices including cellular telephones, it becomes possible that a player enjoys playing the game anytime anywhere when he/she likes.

Moreover, in the present embodiment, a configuration may be employed so that, every time when the inputting operation part 53 is operated to be depressed, the screen in the vicinity of the cursor 71 is gradually displayed in an enlarged manner with a plurality of steps.

In addition, when an enlarged display is carried out, whether or not a difference image is included in an image displayed in an enlarged manner is judged, and if it is judged that a difference image is included in the image displayed in an enlarged manner, a message, for example, "Good! Keep it up!" is displayed on the display 54, and if it is judged that no difference image is included in the image displayed in an enlarged manner, a message, for example, "Not here." is displayed on the display 54.

Next, the CPU 51 executes a process to judge as to whether or not an answer has been inputted (step S75).

In a difference detection game of the present invention, as described above, a difference detection game is played with animated images. When a player inputs an answer of the difference detection game, this is carried out in such a manner as to stop, when a difference is displayed in the animated image, the image at this part and point out the difference part by an operation of the inputting operation part 53.

In the present step, the CPU 51 judges as to whether or not the player playing the difference detection game has inputted an answer of the game through the inputting operation part 53 of the cellular telephone 30. If it is judged that no answer has been inputted, the CPU 51 carries out a determination of step S75 again. On the other hand, if it is judged that an answer has been inputted, the CPU 51 shifts the process to step S76.

Next, the CPU 51 executes a process to transmit an answer (step S76).

In the present step, answer data inputted by the player in step S75 is transmitted to the server 10. When the process to transmit an answer ends, the CPU 51 shifts the process to step S77.

Next, the CPU 51 shifts to a standby mode for a game result (step S77).

Herein, the "game result" refers to an incoming game result which is transmitted from the server 10 in response to a player's answer transmitted to the server 10 in the former step S76, that is, whether or not the answer was correct, and a point if the answer was correct. In the present step, the cellular telephone 30 is in a standby mode for this incoming game result transmitted from the server 10.

Next, the CPU 51 executes a process to judge as to whether or not a game result has been received (step S78).

In the present step, if it is judged that a game result has not been received, the CPU 51 returns the process to step S77 again and shifts to a standby mode for a game result. On the other hand, in the present step, if it is judged that a game result has been received, the CPU 51 displays the game result on the display 54 of the cellular telephone 30 then immediately ends this subroutine.

By carrying out the above processes, a difference detection game system of the present invention can be of a configuration where a cellular telephone user can play a difference detection game anytime anywhere. Moreover, in the above-described embodiment, a description has been given in a case where a cellular telephone is used in a difference detection game system of the present invention, however, the present invention is not limited hereto, and a portable terminal device such as a PDA may be used.

According to the present invention, "a game server which can transmit and receive data to and from a plurality of portable terminal devices via a communication line, executes a difference detection game on a display provided in the portable terminal device, and comprises answer data storage means for storing data indicating an answer of the difference detection game provided from the portable terminal device, correct answer data storage means for storing correct answer data to be a criterion for judging whether or not data showing an answer stored by the answer image storage means, comparing means for comparing answer data stored by the answer data storage means with correct answer data memorized by the correct answer data storage means, and providing means for displaying a point or a prize on the display when, as a result of a comparison by the comparing means, the answer data is judged to be a correct answer" can be constructed so that the game server is "provided with image switching means for switching and alternatively displaying a reference image for reference in difference detection and a difference image for display, and switching time setting means for setting a time in which switching of an image displayed on the display is carried by the image switching means, and the image switching means has a function to switch and display the reference image and the difference image on the display according to an interval set by the switching time setting means.

When this invention's game server is used, since a game can be played, for example, in connection with a communication line or after downloading game data from the server, a portable terminal device user can play a difference detection game anytime and anywhere he/she likes whenever he/she wants to play it.

In addition, since a reference image and a difference image are switched and alternatively displayed, an advantage is provided such that, compared to simultaneously displaying a reference image and a difference image by splitting a screen into a plural number, a game can be played in an easily viewable condition even on a portable terminal device with a small screen.

Furthermore, since the game server controls the time for switching a reference image and a difference image, a new effect is provided such that it is also possible to shorten a switching time for a difference image, that is, to reduce a difference image reproducing time so that a user cannot easily elicit a correct answer, and on the other hand, it is also possible to prolong the switching time, that is, to extend the difference image reproducing time so that a user can easily elicit a correct answer.

Still furthermore, as in this invention, the display image switching time is provided as one element so that, by changing the same, the difficulty level of the game can be changed, therefore, it becomes possible to easily provide a player with a difference detection game having difficulty level variations in an ample amount without employing a method such that a large quantity of difference detection games are managed in advance according to difficulty levels. Moreover, this allows a reduction in the burden of control carried out in the game server .

## Claims

1. A game server being capable of transmitting and receiving data to and from a plurality of user terminal devices via a communication line, the game server comprising:
point providing means for providing a point to a player on receipt of a correct answer from the player with a difference detection game executed on a display provided to each of the user terminal devices; and
image switching means for switching and alternately displaying a reference image for reference and a difference image on the display to find differences.

2. The game server according to Claim 1, further comprising:
switching timing setting means for setting a timing for switching and alternately displaying the reference image and the difference image on the display,
wherein the image switching means has a function to switch and alternately display the reference image and the difference image on the display at the timing set by the switching timing setting means.

3. The game server according to Claim 2, further comprising:
play-number storing means for storing a play-number data indicating a number of times that the player plays the difference detection game;
player identification means for identifying the player to play the difference detection game; and
number-comparing means for comparing a reference-number data as a criterion to determine whether or not the player identified by the player identification means has frequently played the difference detection game and the play-number data that has been stored in the play-number storing means,
wherein the switching timing setting means sets the timing in accordance with a comparison result by the number-comparing means.

4. The game server according to Claim 2, further comprising:
winning-number storingmeans for storing a numerical value data of acquired points or prizes for winning with the difference detection game played by the player; and
player identification means for identifying the player to play the difference detection game; and;
numerical value comparing means for comparing a reference numerical value data as a criterion to determine whether or not the player identified by the player identification means has won a large number of points or prizes with the difference detection game and the numerical value data stored in the winning-number storing means,
wherein the switching timing setting means sets the timing in accordance with a comparison result by the numerical value comparing means.

5. The game server according to Claim 3 or 4, comprising:
hint image display control means for displaying a hint image to assist the player to find a correct answer on the display in accordance with the comparison result by the number-comparing means or the numerical value comparing means.

6. A game server being capable of transmitting and receiving data to and from a plurality of user terminal devices via a communication line, the game server comprising:
point providing means for providing a point to a player on receipt of a correct answer from the player with a difference detection game executed on a display provided to each of the user terminal devices; and
image display means for displaying simultaneously on the display a reference image for reference and a plurality of difference images to find differences.

7. The game server according to Claim 6, wherein the point providing means sets an obtainable number of points for each of the plurality of difference images.

8. The game server according to Claim 6 or 7, wherein each of the plurality of difference images includes one difference from the reference image, and the game server comprising:
image selecting means for letting the player select one difference image out of the plurality of difference images to play the difference detection game.

9. A game server being capable of transmitting and receiving data to and from a plurality of user terminal devices via a communication line, the game server comprising:
providing means for providing a point or prize to a player on receipt of a correct answer from the player with a difference detection game executed on a display provided to each of the user terminal devices;
image display means for simultaneously displaying a reference image for reference and a plurality of difference images on the display;
image selecting means for letting the player select one difference image out of the plurality of difference images for playing the difference detection game; and
a correspondence data set for establishing a correspondence between each of the plurality of difference images and the point or prize; and
corresponding image display means for displaying a corresponding image on the display by selecting the correspondence data set corresponding to any one of the plurality of difference images on receipt of the correct answer from the player.

10. A game server being capable of transmitting and receiving data to and from a plurality of user terminal devices via a communication line, the game server comprising:
providing means for providing a point or prize to a player on receipt of a correct answer from the player with a difference detection game executed on a display provided to each of the user terminal devices;
reference image display means for displaying a reference image for reference on the display as an animated image;
difference image displaymeans for displaying a difference image as an animated image; and
image switching means for switching and alternately displaying the reference image and the difference image to find differences.

11. The game server according to Claim 10, comprising:
switching time setting means for setting an interval for which the reference image and the difference image are alternatively displayed on the display by the image switching means,
wherein the image switching means has a function to switch and display the reference image and the difference image on the display in accordance with the interval set by the switching time setting means.

12. The game server according to Claim 10 or 11, further comprising:
cumulative number-comparing storing means for cumulatively storing a number of times that the reference image and the difference image are alternatively displayed on the display by the image switching means;
a plurality of correspondence data sets for establishing a correspondence between the difference images and the point or prize; and
corresponding image display means for displaying a corresponding image on the display by selecting one data set from the plurality of correspondence data sets corresponding to the difference images based on the number of times stored in the cumulative number-comparing storing means on receipt of the correct answer from the player.

13. A game server being capable of transmitting and receiving data to and from a plurality of terminal devices via a communication line, the game server comprising:
answer data storing means for storing answer data showing an answer with a difference detection game executed on a display provided to each of the terminal devices;
correct answer data storing means for storing correct answer data as a criterion to determine whether or not the answer data stored in the answer data storing means matches the correct answer data;
comparing means for comparing the answer data stored in the answer data storing means and the correct answer data stored in the correct answer data storing means;
providing means for providing a point or prize to display on the display on determination that the answer data matches the correct answer data as a comparison result by the comparing means;
image switching means for switching and alternately displaying the reference image for reference and the difference image on the display; and
switching time setting means for setting an interval for which the reference image and the difference image are alternatively displayed on the display by the image switching means,
wherein the image switching means has a function to switch and display alternatively the reference image and the difference image on the display in accordance with the interval set by the switching time setting means.

14. The game server according to Claim 13, further comprising:
data providing means for providing data for the plurality of terminal devices via a communication line;
reference image data storing means for storing reference image data to display the reference image for reference on the display provided to each of the terminal devices; and
difference image data storingmeans for storing difference image data to display the difference image on the display,
wherein the data providing means provides the reference image data and the difference image data for the terminal devices before executing the difference detection game on the display of each of the terminal devices.

15. The game server according to Claim 13 or 14, comprising:
image display control means for displaying the reference image or the difference image, in an enlarged manner or a reduced manner in response to an image enlarging request or an image reducing request from each of the terminal devices on the display.

16. The game server according to any one of Claims 13 to 15, comprising:
number-of-times-of-enlargement storing means for storing a number of times that the image display control means displays the reference image or the difference image in an enlarged manner;
a plurality of correspondence data sets for establishing a correspondence between the difference images and the point or prize; and
corresponding image display means for displaying a corresponding image on the display by selecting one data set from the plurality of correspondence data sets corresponding to the difference images according to the number of times of displaying in an enlarged manner stored in the number-of-times-of-enlargement storing means on determination that the answer data is correct as a comparison result by the comparing means.

17. A game server being capable of transmitting and receiving data to and from a plurality of user terminal devices via a communication line, the game server comprising:
answer data storing means for storing answer data showing an answer with a difference detection game executed on a display provided to each of the user terminal devices;
correct answer data storing means for storing correct answer data as a determination criterion whether or not the answer data stored in the answer data storing means matches the correct answer data;
comparing means for comparing the answer data stored in the answer data storing means and the correct answer data stored in the correct answer data storing means; and
providing means for providing a point or prize to display on the display on determination that the answer data matches the correct answer data as a comparison result by the comparing means;
play history storing means for storing play history data with a different game than the difference detection game being provided on a display provided to each of the user terminal devices, the different game having been executed on the display before the difference detection game;
reference image display means for displaying a replay image of the different game as a reference image of the difference detection game based on the play history data stored in the play history storing means on the display;
difference image creating means for creating a difference image of the difference detection game based on the play history data stored in the play history storing means, the difference image being different from the replay image; and
image display means for displaying the difference image created by the difference image creating means on the display.

18. The game server according to Claim 17, further comprising:
image switching means for switching and alternately displaying the reference image for reference and the difference image on the display; and
switching time setting means for setting an interval for which the reference image and the difference image are alternatively displayed on the display by the image switching means,
wherein the image switching means has a function to switch and display the reference image and the difference image on the display in accordance with the interval set by the switching time setting means.

19. The game server according to Claim 17 or 18, comprising:
data providing means for providing data for the plurality of user terminal devices via the communication line;
reference image data storing means for storing reference image data to display the reference image on the display; and
difference image data storingmeans for storing difference image data to display the difference image on the display,
wherein the data providing means provides the reference image data to display the reference image and the difference image data to display the difference image for the user terminal devices before executing the difference detection game on the display.

20. A program running on a game server being capable of transmitting and receiving data to and from a plurality of user terminal devices via a communication line, the server executing a difference detection game on display provided to each of the user terminal devices, the program executing the steps of:
providing a point to the player on receipt of a correct answer from the player playing the difference detection game; and
switching and alternately displaying a reference image for reference and a difference image on the display to find differences.

21. A program running on a game server being capable of transmitting and receiving data to and from a plurality of user terminal devices via a communication line, the server executing a difference detection game on a display provided to each of the user terminal devices, the program executing the steps of:
providing a point to the player on receipt of a correct answer from the player playing the difference detection game; and
simultaneously displaying a reference image for reference and a plurality of difference images for the difference detection game on the display.

22. A program running on a game server being capable of transmitting and receiving data to and from a plurality of user terminal devices via a communication line, the server comprising providing means for providing a point or prize to a player on receipt of a correct answer from the player with a difference detection game executed on a display provided to each of the user terminal devices , the program executing the steps of:
displaying a reference image for reference as an animated image on the display;
displaying a difference image as an animated image; and
switching and alternately displaying the reference image and the difference image.

23. A program running on a game server being capable of transmitting and receiving data to and from a plurality of terminal devices via a communication line, the game server comprising:
answer data storing means for storing answer data showing an answer with a difference detection game executed on a display provided to each of the user terminal devices;
correct answer data storing means for storing correct answer data as a determination criterion whether or not the answer data stored in the answer data storing means matches the correct answer data;
comparing means for comparing the answer data stored in the answer data storing means and the correct answer data stored in the correct answer data storing means; and
providing means for providing a point or prize to display on the display on determination that the answer data matches the correct answer data as a comparison result by the comparing means, the program executing the steps of:
switching and alternately displaying a reference image for reference and a difference image on the display; and
setting an interval for which the reference image and the difference image are displayed alternatively on the display with the interval.

24. A program running on a game server being capable of transmitting and receiving data to and from a plurality of user terminal devices via a communication line, the game server comprising:
answer data storing means for storing answer data showing an answer with a difference detection game executed on a display provided to each of the user terminal devices;
correct answer data storing means for storing correct answer data as a determination criterion whether or not the answer data stored in the answer data storing means matches the correct answer data;
comparing means for comparing the answer data stored in the answer data storing means and the correct answer data stored in the correct answer data storing means; and
providing means for providing a point or prize to display on the display on determination that the answer data matches the correct answer data as a comparison result by the comparing, the program executing the steps of:
storing play history data with a different game than the difference detection game being provided on a display provided to each of the user terminal devices, the different game having been executed on the display before the difference detection game;
displaying a replay image of the different game as a reference image of the difference detection game based on the stored play history data on the display;
creating a difference image of the difference detection game based on the stored play history data, the difference image being different from the replay image; and
displaying the created difference image on the display.
